## Europäisches Patentamt
## European Patent Office
## Office européen des brevets

(19)

(11) Veröffentlichungsnummer: **0 314 813**
A1

(12) **EUROPÄISCHE PATENTANMELDUNG**

Veröffentlicht nach Art. 158 Abs. 3 EPÜ

(21) Anmeldenummer: 88904713.0

(22) Anmeldetag: 14.04.88

Daten der zugrundeliegenden internationalen Anmeldung:

(86) Internationale Anmeldenummer:
PCT/SU88/00082

(87) Internationale Veröffentlichungsnummer:
WO88/08960 (17.11.88 88/25)

(51) Int. Cl.³: **G 01 B 15/00**
**G 01 B 11/26**

(30) Priorität: 05.05.87 SU 4232328

(43) Veröffentlichungstag der Anmeldung:
10.05.89 Patentblatt 89/19

(84) Benannte Vertragsstaaten:
AT DE FR GB IT NL SE

(71) Anmelder: TSENTRALNY
NAUCHNO-ISSLEDOVATELSKY
GEOLOGORAZVEDOCHNY INSTITUT TSVETNYKH I
BLAGORODNYKH METALLOV (TSNIGRI)
Varshavskoe shosse, 129b
Moscow, 113545(SU)

(72) Erfinder: MIKHEEV, Sergei Mikhailovich
ul. Zelenodolskaya, 17-5-72
Moscow, 109457(SU)

(72) Erfinder: ZEMEROV, Valery Nikolaevich
pr. Vernadskogo, 67-16
Moscow, 117415(SU)

(72) Erfinder: ELSHANSKY, Petr Vasilievich
Volzhsky bulvar, 6-1-17
Moscow, 109518(SU)

(74) Vertreter: Nix, Frank Arnold, Dr.
Kröckelbergstrasse 15
D-6200 Wiesbaden(DE)

(54) VORRICHTUNG UND VERFAHREN ZUR STEUERUNG DER BESCHAFFENHEIT VON LANGEN GEGENSTÄNDEN.

(57) Das Verfahren zur Kontrolle des Zustands von langgestreckten Objekten besteht in der Synthese von Charakteristiken einer langen Wellenenergie-Übertragungsleitung (3), welche die Anwendung dieser Leitung (3) als verteiltes sensibles Element und als Kanal zur Übertragung der Information über Änderungen des zu kontrollierenden Parameters eines langgestreckten Objekts (1) ermöglichen. Bei der Anordnung einer derartigen Leitung (3) in der Kontrollzone des langgesteckten Objekts (1) sowie bei der Erzeugung eines Bezugssignals mit vorgegebener räumlich-zeitlicher Struktur in dieser Leitung (3) und bei der Bildung eines Messignals erhält man durch Verarbeitung dieser Signale eine stetige Verteilung des zu kontrollierenden Parameters und beurteilt man den Zustand des langgestreckten Objekts (1).

Die Einrichtung zur Realisierung dieses Verfahrens enthält in Reihe geschaltet – eine Quelle (21) modulierter Wellenenergie, ein Raumwellenfilter (23), eine lange Wellenenergie-Übertragungsleitung (3), ein zweites Raumwellenfilter (27), einen Informationsverarbeitungsblock (22) und ein Videoterminal (31). Als Leitung (3) wird ein Multimoden- Wellenleiter benutzt, in dem ein Bezugssignalkanal (13) und ein Messkanal (14) in Wechselwirkung stehen.

FIG. 8

\

# VERFAHRUNG UND EINRICHTUNG ZUR KONTROLLE DES ZUSTANDS VON LANGGESTRECKTEN OBJEKTEN

## Gebiet der Technik

Die Erfindung bezieht sich auf die Kontroll- und Messtechnik, insbesondere auf Verfahren und Einrichtungen zur Kontrolle des Zustands von langgestreckten Objekten. Unter langgestreckten Objekten werden Festkörper, flüssige und gasförmige Medien sowie ihre Kombinationen verstanden, deren physikalisch-mechanische Kenngrössen längs einer vorgegebenen Koordinate kontrolliert werden.

Als zu kontrollierende Parameter von langgestreckten Objekten können z.B. in Betracht kommen:

- Krümmung (Biegung) und Torsion eines langgestreckten Objekts (einer Konstruktion);

- Koordinaten vorgegebener Punkte in Bezug auf das gewählte Referenzsystem;

- Längenänderung bei einer Konstruktion infolge von Zug- und Druckbeanspruchung;

- bleibende Verformungen bei Biegung, Zug, Druck, Verdrehung, die auf Werkstoffermüdung schliessen lassen;

- Änderung der Querschnittsform bei langgestreckten Objekten;

- Vibrationsverteilung längs eines langgestreckten Objekts;

- äussere Kräfte (Ruhedruck, dynamische Wind- oder hydrodynamische Belastungen).

## Zugrundeliegender Stand der Technik

Bei einem bekannten holographischen Verfahren zur Kontrolle des Zustands von langgestreckten Objekten (vgl. D.I.Mirovitski u.a. "Mikrowellenoptik und Holografie", 1983, Verlag "Nauka", Moskau, S.179, 205, 206) wird die Oberfläche des zu kontrollierenden Objekts von einer Referenzlichtquelle bestrahlt, worauf das Referenzlichtsignal und das an der Oberfläche des zu kontrollierenden Objekts reflektierte Lichtsignal auf einem fotoempfindlichen Stoff registriert werden und darauf ein Interferenzbild erzeugen. Dieser Stoff und die Lichtquelle werden vor Beginn der Messung in der Kontrollzone angeord.-net. Nach der Festhaltung des Interferenzbildes auf dem lichtempfindlichen Stoff wird das Raumbild des zu kontrollierenden Objekts durch Belichtung mittels derselben Referenzlichtquelle reproduziert.

Es ist auch ein endoskopisches Verfahren zur Kontrolle des Zustands von langgestreckten Objekten bekannt (vgl. D.I. Mirovitzki u.a. "Mikrowellenoptik und Holographie", 1983, Verlag "Nauka", Moskau, S. 215). Dieses Verfahren schliesst alle Hauptvorgänge des holographischen Verfahrens ein, und sieht nach dem Fixieren des Interferenzbildes auf einem lichtempfindlichen Stoff die Übertragung dieses Bildes über Lichtleiter vor, um es darauf zur Reproduktion des Raumbildes des zu kontrollierenden Objekts zu verarbeiten.

Zur Realisierung des holographischen und des endoskopischen Verfahrens ist eine bekannte Einrichtung zur Kontrolle des Zustands von langgestreckten Objekten bestimmt (vgl. D.I.Mirovitski u.a. "Mikrowellenoptik und Holographie", 1983, Verlag "Nauka", Moskau, S.205, 206, 215). Diese Einrichtung enthält eine Referenzlichtquelle und einen lichtempfindlichen Stoff, die in der Kontrollzone so angeordnet sind, dass ein an der Oberfläche reflektiertes Signal auf den lichtempfindlichen Stoff fällt. Zur Einrichtung gehören auch Lichtleiter zur Übertragung des Interferenzbildes sowie eine Einheit zur Verarbeitung dieses Bildes zwecks Reproduktion des Raumbildes des zu kontrollierenden Objekts.

Für das holographische und das endoskopische Verfahren zur Kontrolle des Zustands von langgestreckten Objekten und für die Einrichtung zur Realisierung dieser Verfahren sind folgende Besonderheiten kennzeichnend (D.I.Mirovitski u.a. "Mikrowellenoptik und Holographie", 1983, Verlag "Nauka", Moskau, S. 221). Diese bekannten Verfahren und die beschriebene Einrichtung können für Objekte angewandt werden, deren Länge nur mehrere zehn Zentimeter beträgt, und wenn die Objektlänge über einem Meter liegt, müssen die Lichtquelle und der licht-

C314813

- 3 -

empfindliche Stoff längs des Objekts verschoben werden. Dadurch wird die Genauigkeit der Interferenzbilderzeugung und somit die Genauigkeit der Messung geometrischer Formen des entstehenden Raumbildes des zu kontrollierenden Objekts bedeutend herabgesetzt. Nach diesen Verfahren kann nur die Geometrie der Objektoberfläche kontrolliert werden, und infolgedessen wird die Möglichkeit der Kontrolle anderer Parameter in bedeutendem Maße begrenzt.

Nach dem technischen Wesen liegt der angemeldeten technischen Lösung ein Verfahren zur Kontrolle des Zustands langgestreckter Objekte am nächsten, welches für die Kontrolle der Geometrie von Risern beim Offshore-Bohren realisiert wurde (AEG-Telefunken, BRD, "Position measuring system for Offshore Installations", System design and mathematical description , 1980, p.10). Bei diesem bekannten Verfahren wird ein Sensor gewählt, der auf Änderungen des zu kontrollierenden Parameters reagiert, welcher den Zustand eines langgestreckten Objekts charakterisiert, und wird eine lange Leitung zur Wellenenergieübertragung gewählt, die zur Übermittlung der Information über Änderungen des zu kontrollierenden Parameters bestimmt ist, der den Zustand des langgestreckten Objekts kennzeichnet, wobei man den gewählten Sensor und die lange Wellenenergie-Übertragungsleitung aneinander koppelt und in der Kontrollzone für die vorgegebene Koordinate anordnet, nach deren Länge eine Änderung des zu kontrollierenden Parameters erfolgt, welcher den Zustand des langgestreckten Objekts charakterisiert, worauf ein in der Zeit moduliertes Bezugssignal erzeugt und dem Eingang der langen Wellenenergie-Übertragungsleitung zugeführt wird, wobei dieses Signal bei seiner Fortpflanzung in der genannten Leitung entsprechend der Änderung des zu kontrollierenden und den Zustand des langgestreckten Objekts charakterisierenden Parameters umgeformt wird, und nun die Parameter des umgeformten Bezugssignals am Ausgang der langen Wellenenergie-Übertragungsleitung gemessen werden, wobei

- 4 -

man nach den gemessenen Parametern des umgeformten Bezugssignals die physikalisch-mechanischen Charakteristiken des Zustands des langgestreckten Objekts längs der vorgegebenen und zur Messung des zu kontrollierenden Parameters benutzten Koordinate bestimmt. Die Vorgänge des Prototyp-Verfahrens werden konkret beim Verfahren der Firme AEG-Telefunken wie folgt realisiert.

Beim bekannten Verfahren werden als Kontrollparameter zur Charakteristik des Zustands eines langgestreckten Objekts (eines Risers) die Winkelabweichung der Riserachse von der Vertikale und die Torsionswinkel des oberen und des unteren Teils des Risers in der Horizontalebene benutzt. Darum erfolgt die Wahl von Sensoren auf Grund der Entwicklung von speziellen Messwertaufnehmern, die auf Änderungen dieser Winkel reagieren, nämlich von Inertialinklinometern und Magnetkompassen. Dann wird eine lange Wellenenergie-Übertragungsleitung in der Art eines abgeschirmten elektrischen Kabels mit Polyäthylen-Schutzhülle gewählt. Die gewählten Messwertaufnehmer und das Kabel werden induktiv aneinandergekoppelt und längs der Achse auf einer Mantellinie des Risers angeordnet, längs welcher die Änderung der zu kontrollierenden Winkel erfolgt. Um eine ausreichende Information über die Achsengeometrie im dreidimensionalen Raum zu erhalten, werden die Sensoren zur Erfassung der Achsenabweichung von der Vertikale an zwei orthogonalen Mantellinien auf der Riseroberfläche angeordnet und befestigt. Dann wird auf den Kabeleingang ein elektrisches Bezugssignal gegeben, das sich in der Zeit mit einer Frequenz von 400 Hz ändert. Bei der Fortpflanzung dieses Signals im Kabel infolge der induktiven Kopplung erfolgt die Speisung der Sensoren und der Empfang ihrer Information über die Winkel, aber auf einer höheren Frequenz im Vergleich zur Trägerfrequenz von 400 Hz. Am Kabelausgang werden die Parameter des elektrischen Bezugssignals gemessen, diese Information wird dekodiert, und auf Grund der Daten über Torsionswinkel und Winkel der Riserachsenabweichung von der

- 5 -

Vertikale ermittelt man die physikalisch-mechanischen Charakteristiken des Riserzustands, indem man die Verteilungen der Krümmung und der Achsenverdrehung bei diesem Riser benutzt. Die ermittelten Charakteristiken bestimmen eindeutig den gespannten und verformten Zustand des Risers und die gegenseitige Lage seiner äussersten Punkte für die dynamische Positionierung.

Nach dem technischen Wesen kommt der angemeldeten technischen Lösung eine Einrichtung zur Kontrolle des Zustands von langgestreckten Objekten, z.B. von Risern beim Offshore-Bohren am nächsten (AEG-Telefunken, BRD, "Position measuring system for Offshore Installations", System design and mathematical description , 1980, p.10). Diese Einrichtung enthält eine zur Erzeugung des zeitlich veränderlichen Bezugssignals bestimmte Quelle modulierter Wellenenergie, eine lange Leitung zur Übertragung der Wellenenergie, die in der Zone der Kontrolle des langgestreckten Objekts längs der vorgegebenen Koordinate verlegt wird, zur Erfassung und Übertragung der Information über Änderungen des zu kontrollierenden Parameters bestimmt ist und an den Ausgang der modulierten Wellenenergiequelle gekoppelt ist, sowie einen mit der langen Wellenenergie-Übertragungsleitung verbundenen Informationsverarbeitungsblock, der zur Auskopplung des von der Wellenenergie-Übertragungsleitung umgeformten Bezugssignals aus dieser Leitung und zur Ermittlung der physikalisch-mechanischen Charakteristiken des Zustands des langgestreckten Objekts bestimmt ist. Ausserdem gehört zu dieser Einrichtung ein Videoterminal, welches die ermittelten physikalisch-mechanischen Daten wiedergibt und mit seinem Eingang am Ausgang des Informationsverarbeitungsblocks liegt.

Als modulierte Wellenenergiequelle wird in der bekannten Einrichtung ein elektrischer Wellenenergiegenerator mit einer Schwingungsfrequenz von 400 Hz benutzt. Das elektrische Kabel dient gleichzeitig zur Speisung der an der Riseroberfläche angeordneten Sensoren sowie zur Erfassung und Übertragung der Information. Deswegen wird

- 6 -

das Kabel längs des gesamten Risers verlegt, und die inneren Kabeladern werden an den Generator und an eine Quelle zeitlich modulierter Hochfrequenzschwingungen (von 33...42 kHz) angeschlossen, die für das Abfragen der Sensoren erforderlich sind. Mit dem Kabel ist auch der Informationsverarbeitungsblock als Zentralstation verbunden, welche die Sensorinformation vom Kabelausgang auskoppelt und in eine für die weitere Verarbeitung geeignete Form umwandelt. Die in dieser Station bearbeitete Information gelangt in Form von Charakteristiken der Geometrie der Riserachsenlinie an das Videoterminal ( hier ein Display) zur Wiedergabe.

Für das bekannte Verfahren und die bekannte Einrichtung zur Kontrolle des Zustands von langgestreckten Objekten sind besonders folgende Einschränkungen charakteristisch.

Nach dem beschriebenen Verfahren und mit der bekannten Einrichtung lassen sich langgestreckte Objekte (Konstruktionen) mit hoher Auflösung und auf grossen Entfernungen von der Konstruktion infolge eingeschränkter Informationskapazität der Wellenenergie-Übertragungsleitung sowie wegen sinkender Zuverlässigkeit der Informationsübertragung bei grösser werdender Leitungslänge und wegen entsprechend stärkerer Störungen und grösserer Spannungsverluste in dieser Leitung nicht kontrollieren. Die Benutzung von diskret einstellbaren Sensoren in der Art von Winkelgebern gibt im Prinzip keine Möglichkeit, die Verteilung des zu kontrollierenden Parameters kontinuierlich zu messen. Möglich ist nur die Approximation der Parameterteilung nach den einzelnen längs der vorgegebenen Koordinate erhaltenen Werten, hier nach den Winkeln der Riserachsenabweichung von der Vertikale. Somit ist die Kontrolle der räumlich und zeitlich kontinuierlichen physikalisch-mechanischen Charakteristiken des langgestreckten Objekts, nämlich der Achsenkrümmungs- und Torsionscharakteristik für einen solchen Riser prinzipiell unmöglich und nur mit Approximationsfehlern erreichbar. Ausserdem sinkt die Gesamtgenauigkeit der Kontrolle noch infolge bedeutender

- 7 -

Fehler der Sensoren selbst. Die induktive, also elektromechanische Ankopplung des Sensors an die lange Wellen-energie-Übertragungsleitung und spezielle Befestigungs-art des Sensors und der Leitung zwingt zur Aufstellung von in ihrer Wirkungsweise verschiedenen Sensoren und zur Organisation ihrer ziemlich komplizierten Abfrageprozedur, also zur Entwicklung und zur Bedienung von kostspieligen elektronischen Unterwasserausrüstungen, deren Zuverlässigkeit niedrig ist.

Die benutzten Winkelgeber zur Erfassung der Winkel der Riserachsenabweichung von der Vertikale haben ausserdem einen beschränkten dynamischen Änderungsbereich des zu kontrollierenden Winkels (höchstens $10^o$) und lassen somit keine Kontrolle von stark verformten Risern zu. Es besteht keine Möglichkeit, mit ein und demselben bekannten Verfahren und mit einer Einrichtung zu seiner Realisierung andere Arten von langgestreckten Objekten zu kontrollieren und das Auflösungsvermögen der Messungen und der Kontrolle zu erhöhen, ohne die Anzahl der Sensoren zu vergrössern und den Abstand der aufgestellten Sensoren voneinander zu verkleinern. Bei der Durchführung der Kontrolle des Zustands eines langgestreck-ten Objekts verbraucht die Einrichtung eine Leistung von rund 2 kW.

Offenbarung der Erfindung

Der Erfindung liegt die Aufgabe zugrunde, ein Verfahren und eine Einrichtung zur Kontrolle des Zustands von langgestreckten Objekten zu entwickeln, die es ermöglichen, eine Fernkontrolle von räumlich und zeitlich ununterbrochenen physikalisch-mechanischen Charakteristiken langgestreckter Objekte durch Vereinigung von Funktionen der Gewinnung und der Übertragung von Messdaten in einer langen Wellenenergie-Übertragungsleitung durchzuführen, die Notwendigkeit der Aufstellung und der Abfrage von verschiedenartigen Sensoren auszuschliessen und dadurch eine wesentliche Erweiterung der Kontrollzone für die Kontrolle des Zustands von langgestreckten Objekten und eine Erweiterung der Arten und der Messbereiche der zu kontrollierenden Parameter bei gleichzeitiger Erhöhung der Genauigkeit, der Schnellwirkung sowie der Auflösung der Parametermessung zu gewährleisten und den Energieverbrauch herabzusetzen.

Das Wesen der Erfindung liegt darin, dass beim Verfahren zur Kontrolle des Zustands von langgestreckten Objekten, bei dem ein Sensor gewählt wird, der auf Änderungen des zu kontrollierenden Parameters reagiert, welcher den Zustand eines langgestreckten Objekts charakterisiert, und eine lange Leitung zur Wellenenergieübertragung gewählt wird, die zur Übermittlung der Information über Änderungen des zu kontrollierenden Parameters bestimmt ist, der den Zustand des langgestreckten Objekts kennzeichnet, wobei man den gewählten Sensor und die lange Wellenenergie-übertragungsleitung aneinander koppelt und in der Kontrollzone für die vorgegebene Koordinate anordnet, nach deren Länge die Änderung des zu kontrollierenden Parameters erfolgt, welcher den Zustand des langgestreckten Objekts charakterisiert, worauf ein in der Zeit moduliertes Bezugssignal erzeugt und dem Eingang der langen Wellenenergie-übertragungsleitung zugeführt wird, wobei dieses Signal bei seiner Fortpflanzung in der genannten Leitung entsprechend der Änderung des zu kontrollierenden und den Zustand des langgestreckten Objekts charakterisierenden Parameters umgeformt wird, und nun die Parameter des umgeformten Bezugssignals am Ausgang der langen Wellenenergie-übertragungsleitung gemessen werden, wobei man nach den gemessenen Parametern des umgeformten Bezugssignals die physikalisch-mechanischen Charakteristiken des Zustands des langgestreckten Objekts längs der vorgegebenen und zur Messung des zu kontrollierenden Parameters benutzten Koordinate bestimmt, - erfindungsgemäss eine lange Wellenenergie-übertragungsleitung gewählt wird, welche die Fortpflanzung von Signalen in der Art von Moden mit bekannter räumlich-zeitlicher Struktur von physikalischen Feldern in dieser Leitung gewährleistet, in dieser langen Wellenenergie-übertragungsleitung wenigstens ein Bezugssignalkanal und mindestens ein Messkanal mit bekannten Verzögerungszeiten der Modephasengeschwindigkeiten in jedem von diesen Kanälen vorgesehen werden, längs der langen Wellenenergie-Übertragungsleitung die gerichtete Wechselwirkung der Wellenenergie der Modefelder wenigstens eines Bezugssignalkanals und mindestens eines Messkanals in Abhängigkeit von der Änderung des zu kontrollierenden Parameters gewährleistet wird, um im Messkanal ein Signal zu erhalten, welches sich bei der Fortpflanzung des Signals im Bezugssignalkanal entsprechend der Änderung des zu kontrollierenden und den Zustand des langgestreckten Objekts kennzeichnenden Parameters ändert, das in der Zeit modulierte Bezugssignal als zeitlich modulierte Schwingungen physikalischer Felder gebildet wird, und diese Schwingungen in ein Signal mit vorgegebener räumlicher Struktur der Modefelder umgeformt werden, die Modefelder an den Ausgängen wenigstens eines Bezugssignalkanals und mindestens eines Messkanals der langen Wellenenergie-Übertragungsleitung in elektrische, nur zeitabhängige Signale umgewandelt werden, um die physikalisch-mechanischen Charakteristiken des Zustands des langgestreckten Objekts längs der vorgegebenen Koordinate zu bestimmen, längs welcher die Änderung des zu kontrollierenden Parameters erfolgt, und die Amplitude des elektrischen Signals am Ausgang des Bezugssignalkanals abgetrennt wird, wobei das elektrische Signals am Ausgang des Messkanals umgekehrt proportional der Amplitudengrosse des elektrischen Signals am Ausgang des Bezugssignalkanals verstärkt wird, die lineare Masstabtransformation benutzt wird, welche die Grösse der Verzögerungszeitdifferenz der Modephasengeschwindigkeiten im Bezugssignalkanal und im Messkanal der langen Wellenenergie-Übertragungsleitung mit der laufenden Zeit der Kontrolle und mit der Ablesung des Koordinatenwertes längs der langen Wellenenergie-Übertragungsleitung verknüpft.

Zweckmässig ist die Wahl einer langen Wellenenergie-Übetragungsleitung, in der die Fortpflanzung von Moden akustischer oder elektromagnetischer oder optischer Felder in entsprechenden Wellenbereichen gewährleistet wird.

- 10 -

Zur Erweiterung des dynamischen Änderungsbereiches des zu kontrollierenden Parameters in das Gebiet seiner Minimalwerte ist es zweckmässig, in der langen Wellen-enrgie-Übertragungsleitung wenigstens einen Bezugs-signalkanal und mindestens einen Messkanal mit gleichen Verzögerungszeiten der Modenphasengeschwindigkeiten vorzusehen, die lange Wellenenergie-Übertragungsleitung in Abschnitte einzuteilen, zwischen den Abschnitten eines Kanals eine konstante Signalverzögerungszeit zu gewährleisten und in den gewählten Abschnitten den Integralwert des zu kontrollierenden Parameters zu messen.

Bei der Gewährleistung der längs der langen Wellen-energie-Übertragungsleitung gerichteten Wechselwirkung der Modenfelder wenigstens eines Bezugssignalkanals und mindestens eines Messkanals ist es für die Messung der Verteilung des zu kontrollierenden Parameters zweck-mässig, wenigstens einen Messkanal mit einer magnetischen Permeabilität, einer dielektrischen Leitfähigkeit, einer akustischen Dichte oder einer optischen Dichte auszuführen, die im funktionalen Zusammenhang mit Änderungen der Grösse dieses zu kontrollierenden Parameters stehen.

Als Kontrollparameter können bevorzugt Temperatur oder Druck oder Feuchtigkeit oder Dichte oder Salzigkeit sowie deren Kombinationen benutzt werden.

Das Wesen der Erfindung besteht auch darin, dass in der Einrichtung zur Kontrolle des Zustands von langgestreckten Objekten mit einer zur Erzeugung des zeitlich veränderlichen Bezugssignals bestimmten Quelle der modulierten Wellenenergie, einer langen Wellenenergie-Übertragungsleitung, die in der Zone der Kontrolle des langgestreckten Objekts längs der vorgegebenen Koordinate verlegt wird, zur Erfassung und Übertragung der Information über Änderungen des zu kontrollierenden Parameters bestimmt ist und mit dem Ausgang der modulierten Wellenenergiequelle in Verbindung steht, sowie mit einem an die lange Wellenenergie-Übertra-gungsleitung angeschlossenen Informationsverarbeitungs-block, der zur Auskopplung des von der Wellenenergie-Übertragungsleitung umgeformten Bezugssignals aus dieser

- 11 -

Leitung und zur Ermittlung der physikalisch-mechanischen Charakteristiken des Zustands des langgestreckten Objekts bestimmt ist, und auch mit einem Videoterminal, welches die ermittelten physikalisch-mechanischen Daten wiedergibt und mit seinem Eingang am Ausgang des Informationsverarbeitungsblocks liegt, - die lange Wellenenergie-Übertragungsleitung erfindungsgemäss als Multimodewellenleiter mit wenigstens einem Bezugssignalkanal und mindestens einem Messkanal ausgeführt wird, deren Verkopplung von Änderungen des zu kontrollierenden Parameters abhängt, die modulierte Wellenenergiequelle einen Modulator und einen mit diesem in Reihe geschalteten Generator zur Erzeugung der Wellenenergie physikalischer Felder einschliesst, und die Einrichtung zur Kontrolle des Zustands von langgestreckten Objekten ein erstes Raumwellenfilter enthält, das zur Erzeugung des modulierten Signals des Bezugssignalkanals mit vorgegebener räumlich-zeitlicher Struktur der Modenfelder bestimmt ist und zwischen dem Ausgang des Wellenenergiegenerators physikalischer Felder und der langen Wellenenergie-Übertragungsleitung eingeschaltet ist, sowie ein zweites Raumwellenfilter aufweist, welches zur räumlichen Trennung der Modenfelder des durch das Bezugssignal erregten Bezugssignalkanals und der Modenfelder des infolge der Zwischenkanalkopplung erregten Messkanals vorgesehen ist, die von Änderungen des zu kontrollierenden Parameters abhängig ist, und welches zwischen der langen Wellenenergie-Übertragungsleitung und den Eingängen des Informationsverarbeitungsblocks liegt, wobei der Eingang und der Ausgang wenigstens eines Bezugssignalkanals als erster Eingang bzw. erster Ausgang der Wellenenergiefelder des ersten bzw. zweiten Raumwellenfilters dienen, und der Eingang sowie der Ausgang wenigstens eines Messkanals den zweiten Eingang bzw. den zweiten Ausgang der Wellenenergiefelder des ersten bzw. zweiten Raumwellenfilters bilden.

Der Informationsverarbeitungsblock kann einen ersten und einen zweiten Synchrondetektor zur Umwandlung der Wellenenergie der Felder in elektrische Signale enthalten, wobei die ersten Eingänge dieser Detektoren entsprechenderweise mit den Ausgängen der Feldwellenenergie des zweiten Raumwellenfilters verbunden werden, sowie einen Integrator und einen Operationsverstärker einschliessen, bei denen der erste Eingang des Operationsverstärkers an den Ausgang des Integrators des zweiten Synchrondetektors geschaltet wird, der Ausgang des Operationsverstärkers den Ausgang des Informationsverarbeitungsblocks bildet und der zweite Eingang des Operationsverstärkers mit dem Ausgang des ersten Synchrondetektors verbunden wird, und ausserdem kann der Informationsverarbeitungsblock einen Überlagerungsoszillator haben, dessen Ausgang mit den zweiten Eingängen des ersten und des zweiten Synchrondetektors verbunden ist.

Zur Gewährleistung des Betriebs im optischen oder Infrarot-Wellenbereich kann der Informationsverarbeitungsblock einen Überlagerungsfrequenzumsetzer zur Erniedrigung der Trägerschwingungsfrequenz der Wellenenergie enthalten, wobei der erste Eingang sowie der zweite Eingang dieses Frequenzumsetzers die Eingänge des Informationsverarbeitungsblocks bilden, seine Ausgänge an die Eingänge des ersten und des zweiten Synchrondetektors angeschlossen werden und sein dritter Eingang mit einem zusätzlichen Ausgang des Synchronüberlagerers verbunden wird.

Die angemeldete technische Lösung ermöglicht eine objektive Kontrolle des Zustands einer breiten Klasse von langgestreckten Objekten durch kontinuierliche Messung räumlich und zeitlich verteiler physikalisch-mechanischer Charakteristiken, die den Zustand solcher Objekte kennzeichnen. Im Unterschied zu den gegenwärtigen bekannten Mitteln der Kontroll- und Messtechnik lässt diese technische Lösung eine bedeutende Vergrösserung der Abmessungen der zu kontrollierenden langgestreckten Objekte im Vergleich zu derzeit erfassbaren Abmessungen zu. Bei Benutzung einer langen Wellenenergie-Übertragsleitung für den optischen Bereich können diese Abmessungen mehrere zehn und Hunderte Kilometer erreichen. Das maximal erreichbare Auflösungsvermögen des angemeldeten Verfahren und der Einrichtung zur Kontrolle längs

- 13 -

einer vorgegebenen Koordinate beträgt eine Halbwelle des benutzten Wellenenergiebereiches. Ausserdem weist das vorgeschlagene Verfahren und die Einrichtung zu seiner Realisierung keine prinzipiellen Einschränkungen für den dynamischen Änderungsbereich der physikalisch-mechanischen Parameter auf, die den Zustand von langgestreckten Objekten charakterisieren. Daraus ergibt sich die universale Anwendbarkeit der angemeldeten Kontrollmittel, wobei eine höhere Messgenauigkeit ohne Herabsetzung der Auflösung erreicht wird. Der bedeutendste Vorteil des angemeldeten Verfahrens zur Kontrolle des Zustands von langgestreckten Objekten und der Einrichtung zur Realisierung dieses Verfahrens ist die Möglichkeit gleichzeitiger Messung einer grösseren Zahl von in ihrer physikalischen Natur verschiedenen Parametern mit Hilfe nur einer Kompositionsleitung zur Übertragung der Wellenenergie (eines Messwellenleiters). Bei Benutzung von optischen Faserleitungen gelingt das ohne elektromagnetische Störungen.

Kurzbeschreibung der Zeichnungen

Die Erfindung wird nachstehend an einem Beispiel ihrer Realisierung und anhand der beigefügten Zeichnungen näher erläutert. Hierbei zeigen

Fig. 1 ein langgestrecktes Objekt in der Art einer gekrümmten Rohrleitung und eine an ihrer Oberfläche befestigte lange Wellenenergie-Übertragungsleitung gemäss der Erfindung;

Fig. 2 eine Verteilung der Krümmung des langgestreckten Objekts nach der Bogenkoordinate längs der Achse des langgestreckten Objekts gemäss der Erfindung;

Fig. 3 a, b, c, d, e, f Diagramme zur Veranschaulichung der Änderungen von Signalen in der langen Wellenenergie-Übertragungsleitung gemäss der Erfindung;

Fig. 4 a, b Diagramme der Signale im Bezugssignalkanal und im Messkanal der langen Wellenenergie-Übertragungsleitung bei der Integralmessung des zu kontrollierenden Parameters gemäss der Erfindung;

- 14 -

Fig. 5 eine konstruktive Ausführung der langen Übertragungsleitung mit Verzögerungsschleifen im Messkanal gemäss der Erfindung;

Fig. 6 a,b Signalverläufe in der langen Übertragungsleitung mit Verzögerungsschleifen im Messkanal gemäss der Erfindung;

Fig. 7 a, b Signalverläufe zur Erläuterung der Benutzung von Videosignalen in den Kanälen der langen Wellenenergie-Übertragungsleitung gemäss der Erfindung;

Fig. 8 ein Strukturbild der Einrichtung zur Kontrolle des Zustands von langgestreckten Objekten gemäss der Erfindung;

Fig. 9 eine konstruktive Ausführung der langen Wellenenergie-Übertragungsleitung mit rechteckigem Querschnitt gemäss der Erfindung (isometrische Darstellung im vergrösserten Masstab);

Fig. 10 eine konstruktive Ausführung der langen Wellenenergie-Übertragungsleitung gemäss der Erfindung mit einem Querschnitt, der eine Kombination von rechteckigen Querschnitten darstellt (isometrische Darstellung im vergrösserten Masstab);

Fig. 11 eine konstruktive Ausführung der langen Wellenenergie-Übertragungsleitung mit ringförmigem Querschnitt gemäss der Erfindung (isometrische Darstellung im vergrösserten Masstab);

Fig. 12 eine konstruktive Ausführung der langen Wellenenergie-Übertragungsleitung, deren Querschnitt erfindungsgemäss eine Kombination von ringförmigen Querschnitten darstellt (isometrische Darstellung im vergrösserten Masstab);

Fig. 13 ein Strukturbild des Informationsverarbeitungsblocks beim Betrieb der langen Wellenenergie-Übertragungsleitung im optischen oder Infrarot-Wellenlängenbereich gemäss der Erfindung;

Fig. 14 ein Blockschaltbild der Einrichtung zur Kontrolle des Zustands von langgestreckten Objekten bei Benutzung einer langen Wellenenergie-Übertragungsleitung, die erfindungsgemäss mit Videosignalen betrieben wird;

- 15 -

Fig. 15 a, b, c, d, e, f Signalverläufe zur Erläuterung des Betriebs der Einrichtung zur Kontrolle des Zustands von langgestreckten Objekten gemäss der Erfindung.

Bevorzugte Ausführungsform der Erfindung

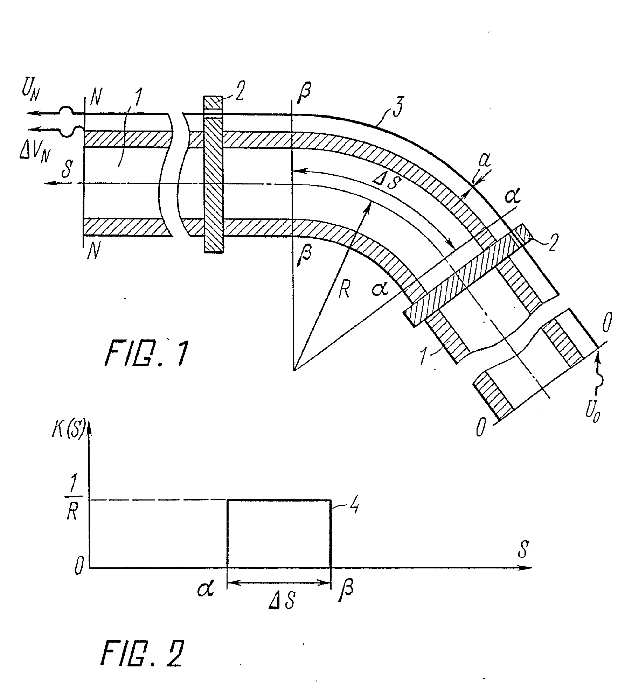

Die theoretische Begründung des Verfahrens zur Kontrolle des Zustands eines langgestreckten Objekts 1 (Fig. 1), z.B. einer gekrümmten Rohrleitung wird an einem Beispiel angeführt, bei dem als zu kontrollierender Parameter die Verteilung der Krümmung K der Erzeugenden der zylindrischen Oberfläche der gebogenen Rohrleitung 1 benutzt wird, die das Objekt der Kontrolle ist. Der Form der Rohrleitung 1 folgt die daran mittels der Bügel 2 befestigte lange Wellenenergie-Übertragungsleitung 3. Vorgegeben ist eine Bogenkoordinate S, die längs der Achsenlinie der Rohrleitung 1 gerichtet ist. Somit stellt die Krümmung K (S) die Verteilung des zu kontrollierenden Parameters dar. Nach dem zu kontrollierenden Parameter werden physikalisch-mechanische Charakteristiken des Zustands der Rohrleitung 1 ermittelt, und zwar die Geometrie der Achsenlinie in der Biegungsebene, und nach der bekannten Biegungssteifigkeit – die inneren Kraftbelastungen.

Die Rohrleitung 1 mit der ihrer Form folgenden und daran befestigten langen Wellenenergie-Übertragungsleitung 3 (im folgenden Messwellenleiter, kurz MWL genannt) ist bei ihrem Element $\Delta$ S mit der vorgegebenen Koordinate S einer regulären Biegung mit dem Radius R ausgesetzt. Die Rohrleitung 1 weist keine Brüche auf, und ihr Durchmesser ist bedeutend grösser als die Breite a des Messwellenleiters. Folglich wird der Messwellenleiter selbst am Leitungselement $\Delta$ S nur gering verformt. Als Messwellenleiter wählt man den einfachsten regulären Zweimoden-Wellenleiter mit bei Biegung zusammenwirkenden Moden, d.h. eine lange Wellenenergie-Übertragungsleitung 3, in der sich die Signale in Form von Moden mit bekannter räumlich-zeitlicher Struktur der physika-

- 16 -

lischen Felder fortpflanzen.

In einer solchen Leitung 3 können sich Moden akustischer oder elektromagnetischer oder optischer Felder in entsprechenden Wellenbereichen ausbreiten.

In Übereinstimmung mit der Wellentheorie für Wellen, die bei geringen Verformungen regulärer Wellenleiter verkoppelt sind (vgl. R.B.Vaganov u.a. "Multimode-Wellenleiter mit zufälligen Irregularitäten", 1972, Verlag "Sovetskoje Radio", Moskau. S. 70), besteht zwischen den Moden im MWL gerichtete Kopplung,  und der Kopplungsfaktor r ist der Krümmung $k = \frac{1}{R}$ beim Leitungselement $\triangle S$ proportional;

$$j k z \triangle S = j k \frac{a}{R} g \triangle S \; ; \quad z = \frac{a}{R} g \qquad \text{/I/}$$

Dabei bedeuten r den Kopplungsfaktor der Moden pro Längeneinheit von $\triangle S$, deren Amplituden nach der Leistung der MWL-Erregung normiert sind; k die Wellenzahl, j die imaginäre Einheit; g einen dimensionslosen Koeffizienten, der durch die Struktur der Felder im MWL bestimmt wird.

Eine von den Moden des MWL wird als Bezugssignalkanal und die andere als Messkanal bei bekannten Verzögerungszeiten der Modenphasengeschwindigkeiten in jedem von diesen Kanälen gewählt. Mit Berücksichtigung der Beziehung $k = \frac{w}{c}$ für die Wellenzahl haben dann die Ausbreitungskonstanten des Bezugssignalkanals bzw. des Messkanals die Form

$$\gamma_{1,2} = k \beta_{1,2} \; , \qquad \text{/2/}$$

wobei $\beta_{1,2}$ die Verzögerungszeiten der Moden des Bezugssignal- bzw. des Messkanals, $w$ die Kreisfrequenz und c die Lichtgeschwindigkeit im Vakuum sind.

Die gerichtete Wechselwirkung der Wellenenergie von Modenfeldern wenigstens eines Bezugssignalkanals und mindestens eines Messkanals längs der langen Wellenenergie-Übertragungsleitung gewährleistet man in Abhängigkeit von der Änderung des zu kontrollierenden Parameters K.

Bei der Gewährleistung der gerichteten Wechselwir-

- 17 -

kung wenigstens eines Bezugssignalkanals und mindestens eines Messkanals längs der langen Wellenenergie-Übertragungsleitung zur Messung der Verteilung des zu kontrollierenden Parameters kann wenigstens ein Messkanal mit einer magnetischen Permeabilität oder dielektrischen Leitfähigkeit, mit einer akustischen oder optischen Dichte ausgeführt werden, die von Änderungen der Grösse dieses zu kontrollierenden Parameters abhängig sind.

Nachstehend wird gezeigt, wie bei Erzeugung der Bezugssignalmode mit einer Amplitude $U_o = U(\omega)e^{j\omega t}$ und einer Frequenz $\omega$ am Eingang des MWL im Querschnitt O-O (Fig. 1) die Messignalmode $\Delta V_N$ am Ausgang des MWL im Querschnitt N-N gebildet wird. Die Verteilung der Krümmung K des Elements $\Delta S$ ist in Fig. 2 (Verlauf 4) gezeigt. Im Querschnitt $\alpha - \alpha$ des Elements $\Delta S$ (Fig. 1) ist die Welle der Bezugssignalmode $U.e^{-j\gamma_1 S}$ wirksam, während im Querschnitt $\beta - \beta$ die vom Element $\Delta S$ zerstreuten Wellen der Bezugssignalmode mit einer Amplitude $U_\beta = U.e^{-j\gamma_1 S}\sqrt{1-k^2 r^2 \Delta S^2}$ sowie je eine Messignalmode mit einer Amplitude $\Delta V_\beta = j U_o kr \Delta S.e^{-j\gamma_1 S}$ erscheinen. Am Ausgang des MWL im Querschnitt N-N werden dann das Bezugssignal und das Messignal die Form

$$U_N = U_o \cdot \sqrt{1 - k^2 r^2 \Delta S^2} \cdot e^{-j\gamma_1 L} ;$$
$$\Delta V_N = j \cdot U_o \cdot r \cdot \Delta S \cdot e^{-j\gamma_2 L} \cdot e^{j(\gamma_1 - \gamma_2)S}$$

/3/

haben. Dabei ist L die Gesamtlänge des MWL vom Querschnitt O-O bis zum Querschnitt N-N.

Die Grössen $U_o$, $U_N$ und $\Delta U_N$ stellen Spektraldichtewerte der Modenamplituden am Eingang und am Ausgang des MWL mit der Frequenz $\omega$ dar. Die Beziehung (3) drückt die Bildung des Spektrums des Messignals $\Delta V_N(\omega)$ am Ausgang des MWL aus dem Bezugssignalspektrum aus. Im Abschnitt vom Querschnitt O-O bis zum Querschnitt $\alpha - \alpha$ mit einer Länge S (Fig. 1) erfolgt die Übertragung des Bezugssignals mit dem Verzögerungsfaktor $e^{-j\gamma_1 S}$, während im Abschnitt vom Querschnitt $\alpha - \alpha$ bis zum Querschnitt $\beta - \beta$ des Elements $\Delta S$ die Umverteilung eines Teils der Energie dieses Spektrums in das Spektrum des Mess-

signals V ($\omega$) und die Übertragung dieses Signals zum Ausgang des MWL mit einem Verzögerungsfaktor $e^{-j\gamma_2(L-S)}$ vor sich geht. Der beschriebene Vorgang erfolgt in jedem Element $\Delta$S des MWL.

Unter Berücksichtigung der Additivität der Signale jedes Elements $\Delta$S im Querschnitt N-N ergibt sich das Gesamtspektrum des Messignals $V_N(\omega)$ am Ausgang des einer Biegung ausgesetzten MWL mit einer Krümmungsverteilung K (S) und unter Beachtung von Vorzeichen als Summe von partiellen Spektren $V_i(\omega)$, die beim Grenzwert in ein Integral bei $\delta = \beta_1 - \beta_2$ übergeht;

$$V_N(\omega) = \lim_{\substack{i=0 \\ \Delta S \to 0}}^{N} \Delta V_i(\omega) = U(\omega)\cdot e^{-j\gamma_1 L} \cdot j\frac{\omega}{c} a \cdot g \int_0^L K(S) e^{-j\frac{\omega}{c}\delta S} dS, \quad /4/$$

während das vollständige Messignal $V_N(t)$ in der Zeit durch die Fourier-Transformation von $V_N(\omega)$

$$V_N(t) = \frac{j}{2\pi} \int_{-\infty}^{+\infty} U(\omega) \frac{a\cdot\omega}{c} g\cdot e^{-j\frac{\omega}{c}\beta_2 L} \int_0^L K(S) e^{-j\frac{\omega\delta}{c}S} dS \cdot e^{j\omega t} d\omega =$$

$$= \frac{1}{2\pi} \int_{-\infty}^{+\infty} U(\omega) \frac{a\cdot g}{\delta} \int_0^L \frac{\partial K(S)}{\partial S} e^{-j\omega(\frac{S}{c}\delta - t)} dS d\omega \quad /5/$$

bestimmt wird.

Das Integral von $\omega$ im Ausdruck (5) bestimmt die sogenannte "apparative Funktion" der Messung (vgl. R.M.Sedetski u.a. "Fragen der Synthese von Funkmesssignalen", 1970, Verlag "Sovetskoje Radio", Moskau, S. 20).

$$f(t - t_S - t_1) = \frac{1}{2\pi} \int_{-\infty}^{+\infty} U(\omega) e^{-j\omega[t - \frac{L\cdot\beta_2}{c} - S(\beta_1 - \beta_2)]} d\omega \quad /6/$$

Dabei sind

$$t_1 = L \frac{\partial \gamma_2}{\partial \omega} = -\frac{L}{V_{g_2}}$$

die Gruppenlaufzeit des sich im Messkanal fortpflanzenden Signals;

$$t_S = (V_{g_1} - V_{g_2}) S/(V_{g_1}\cdot V_{g_2})$$

die laufende Gruppenlaufzeit des Messignals längs des MWL;

$$V_{g_1}, g_2 = )(-\frac{\partial \gamma_{1,2}}{\partial \omega})^{-1}$$

die Gruppengeschwin-

digkeit der Signale, die
sich im Referenzsignalkanal
bzw. im Messkanal fortpflanzen.

Unter Berücksichtigung der Beziehung (6) lässt sich
das Messsignal wie folgt bestimmen:

$$V(t) = \frac{ag}{c} \int_0^L \frac{\partial K(S)}{\partial S} f\left(t - t_1 - (V_{g_1} - V_{g_2}) S / (V_{g_1} V_{g_2})\right) dS = \begin{cases} V(t); & t \in [t_1 \div t_1 + T] \\ 0; & t \notin [t_1 \div t_1 + T] \end{cases}$$

/7/

Dabei ist $T = L(V_{g_1} - V_{g_2})/(V_{g_1} V_{g_2})$ das Messzeitintervall (die ganze vom Messignal in Anspruch genommene Zeit).

Um also im Messkanal ein Signal zu erhalten, das
sich bei der Fortpflanzung des Signals im Bezugskanal
in Übereinstimmung mit der Änderung des zu kontrollierenden Parameters ändert, welches den Zustand des langgestreckten Objekts charakterisiert, wird das in der
Zeit modulierte Bezugssignal in der Art von zeitlich
modulierten Schwingungen der physikalischen Felder erzeugt, wobei man diese Schwingungen in ein Signal mit
einer vorgegebenen räumlichen Modenfeldstruktur umwandelt und darauf die Modenfelder an den Ausgängen
wenigstens eines Bezugssignalkanals und mindestens eines
Messkanals der langen Wellenenergie-Übertragungsleitung
in elektrische Signale umsetzt, die nur von der Zeit abhängig sind.

Somit stellt der MWL ein lineares Messgerät mit der
apparativen Funktion $f(t - t_1 - t_S)$ dar. Je kürzeres
Zeitintervall die apparative Funktion in Anspruch nimmt,
desto höher ist das Auflösungsvermögen des Geräts. Wenn
$f(t)$ die Diracsche Delta-Funktion $\tilde{\delta}(t - t_1 - t_S)$ ist,
so ist

$$V(t) = \frac{ag}{c} \frac{\partial K[S(t)]}{\partial S}.$$

Die Bestimmung der räumlichen Verteilung $K(S)$ erfolgt durch die Masstabumrechnung nach der Zeitfunktion

- 20 -

$$S(t) = t(V_{g_1} \ V_{g_2}) \ (V_{g_1} - V_{g_2})^{-1} \ .$$

Die aufgeführten Betrachtungen sind nur einleitende Darstellung des physikalischen Wesens des Verfahrens zur Kontrolle des Zustands von langgestreckten Objekten vom Standpunkt der Analyse der allgemeinen Signaleigenschaften aus.

Die vollständige theoretische Begründung dieses Verfahrens mit einer Analyse der an die Parameter des MWL und des zeitlich modulierten Bezugssignals zu stellenden Forderungen wird nachstehend unter Benutzung der Theorie gekoppelter Wellenleiter und der Spektralanalyse von Signalen angeführt.

Jeder Abschnitt i des MWL mit einer Länge von $\Delta S_i$ stellt einen Wellenrichtkoppler mit einem Kopplungsfaktor $r_i = \Psi K_i$ dar, wobei $\Psi$ der Proportionalitätsfaktor und $K_i$ der Wert des zu kontrollierenden Parameters (der Krümmung) des Elements $\Delta S_i$ sind. Der ganze MWL ist somit eine Kette von in Reihe geschalteten Richtkopplern. Die Grössen der Spektralamplituden $U_o(\omega)$, $U_N(\omega)$ und $V_N(\omega)$ sind durch eine Streumatrix $[S]$ des MWL verknüpft, welche die Wellenübertragung vom Eingangsquerschnitt 0-0 zum Ausgangsquerschnitt N-N beschreibt:

$$\begin{bmatrix} U_N \\ V_N \end{bmatrix} = \begin{bmatrix} S \end{bmatrix} \begin{bmatrix} U_o \\ 0 \end{bmatrix} ; \begin{bmatrix} S \end{bmatrix} = \prod_{i=1}^{N} \begin{bmatrix} S_i \end{bmatrix} , \qquad /8/$$

Dabei sind $[S_i]$ die Streumatrix des i-ten Elements des MWL mit einer Länge von $\Delta S_i$ und einem Wert $K_i$ des daran zu messenden Parameters und N die Zahl von Elementen $\Delta S_i$ auf einer Länge L. Die Matrix $[S_i]$ kann für einen beliebigen Zweimoden-MWL wie folgt dargestellt werden:

$$[S_i] = e^{-j\varphi_i}[(t_i \,\rangle\langle\, t_i) + e^{-j2\Delta S_i \sqrt{(\frac{\gamma_1 - \gamma_2}{2})^2 + k^2 \cdot \tau_i^2}} \cdot (h_i \,\rangle\langle\, h_i)], /9/$$

mit

$$\varphi_i = \left( \frac{\gamma_1 + \gamma_2}{2} + \sqrt{(\frac{\gamma_1 + \gamma_2}{2})^2 + k^2 \cdot \tau_i^2} \right) \cdot \Delta S_i \ ;$$
$$\tau_i = \Psi K_i ; \ \langle t_i, \langle h_i$$

- 21 -

und $r_i = \psi K_i$; $< t_i$, $< h_i$ als einem Paar von reellen orthonormierten Vektoren, die der Matrix $S_i$ eigen sind und über $r_i$ wie folgt bestimmt werden

$$< t_i = \frac{1}{\sqrt{1 + th^2 \frac{x_i}{2}}} \left[ 1 ; th \frac{x_i}{2} \right],$$

$$< h_i = \frac{1}{\sqrt{1 + th^2 \frac{x_i}{2}}} \left[ th \frac{x_i}{2} ; -1 \right], \quad t_i > = \{< t_i\}^T,$$

$$h_i > = \{< h_i\}^T, \quad x_i = Arcsh \frac{2 z_i k}{(\gamma_1 - \gamma_2)} = Arcsh \left( \frac{2 z_i}{\delta} \right) \qquad /10/$$

Hier bedeutet $\{..\}^T$ die Transponierungsoperation.

Unter Berücksichtigung der Ausdrücke (8) und (9) lässt sich die Matrix $[S]$ als Funktion der Frequenz $\omega$ darstellen:

$$[S(\omega)] = e^{-j\varphi_N} \prod_{i=1}^{N} \left[ (t_i > < t_i) + e^{-\frac{j 2\Delta S_i \omega}{c} \sqrt{\left(\frac{\delta}{2}\right)^2 + z_i^2}} \cdot (h_i > < h_i) \right] \qquad /11/$$

Dabei ist $\varphi = \sum_{i=1}^{N} \varphi_i$ .

Die zeitliche Verknüpfung der Signale $U_N(t)$, $V_N(t)$ am Ausgang des MWL mit dem Signal $U_o(t)$ an seinem Eingang wird aus dem Spektrum des Eingangssignals $U_o(\omega)$ und aus der Matrix $[S]$ ermittelt:

$$\left[ \begin{array}{c} U_N(t) \\ V_N(t) \end{array} \right] = \frac{1}{2\pi} \int_{-\infty}^{+\infty} [S(\omega)] \left[ \begin{array}{c} U_o(\omega) \\ 0 \end{array} \right] e^{j\omega t} d\omega . \qquad /12/$$

Da die Signale impulsförmig sind, kann ihre Darstellung nach Laplace bequem benutzt werden, wenn man im Ausdruck (12) $j\omega = p$ setzt:

$$\left[ \begin{array}{c} U_N(t) \\ V_N(t) \end{array} \right] = \frac{1}{2\pi j} \int_{\alpha-j\infty}^{\alpha+j\infty} e^{-\varphi(p)} \prod_{i=1}^{N} \left[ (t_i > < t_i) + e^{-\frac{2\Delta S_i}{c} \sqrt{\left[\frac{\gamma_1(p) - \gamma_2(p)}{2}\right]^2 + (pz)^2}} \cdot (h_i > < h_i) \right] \left[ \begin{array}{c} U_o(p) \\ 0 \end{array} \right] e^{-pt} dp \quad (13)$$

Das Wesen des Verfahrens wird begründet sein, wenn bei bekannten Parametern $\psi$, L, $\gamma_1$, $\gamma_2$ des MWL und beim bekannten Bezugssignal $U_o(t)$ am Eingang des MWL die Möglichkeit gegeben wird, auf Grund funktechnischer Messun-gen und der Behandlung der zeitabhängigen Signale $U_o(t)$ und $V_N(t)$ am Ausgang des MWL die Verteilung der Grösse $K_i$ und $\Delta S_i$ längs des MWL zu bestimmen.

- 22 -

Unter funktechnischen Messungen werden Messungen von Amplituden-, Frequenz- und Phasen beziehungen zwischen den elektrischen Signalen sowie die Messung der Zeitintervalle zwischen den Signalen verstanden. Unter Behandlung der Signale wird die Möglichkeit verstanden, algebraische Operationen an den Signalen durchzuführen.

Einleitend wird das Verfahren zur Kontrolle von langgestreckten Objekten betrachtet, bei dem ein nichtdisperser MWL benutzt wird. Dabei ist $\gamma_{1,2} = \frac{w}{c} \beta_{1,2}$, und die Verzögerungszeiten $\beta_{1,2}$ sind von der Frequenz $w$ unabhängig.

Bei diesen Bedingungen hat der Ausdruck (13) die Form:

$$\begin{bmatrix} U_N(t) \\ V_N(t) \end{bmatrix} = \frac{1}{2\pi j} \int_{\alpha-j\infty}^{\alpha+j\infty} e^{-\rho t_0} \prod_{i=1}^{N} \left[ (t_i \rangle\langle t_i) + e^{-\Delta t_i \rho} \cdot (h_i \rangle\langle h_i) \right] \begin{bmatrix} U_0(\rho) \\ 0 \end{bmatrix} \cdot e^{\rho t} d\rho \qquad /14/$$

Dabei sind

$$\Delta t_i = \frac{2 \cdot \Delta S_i}{c} \sqrt{\left(\frac{\delta}{2}\right)^2 + z_i^2} \quad ; \quad \delta = \beta_1 - \beta_2 \quad ;$$

$$t_0 = \frac{L}{c}\left(\frac{\beta_1 + \beta_2}{2}\right) - \frac{1}{c} \sum_{i=1}^{N} \sqrt{\left(\frac{\delta}{2}\right)^2 + z_i^2} \cdot \Delta S_i \quad .$$

Der Multiplikator $e^{-\Delta t_i \rho}$, bei dem $\Delta t_1$ zweidimensional ist, bestimmt die zeitliche Signalverzögerung bei der Fortpflanzung des Signals im MWL gemäss der Theorie der Laplace-Transformation. Wenn man dies berücksichtigt, so folgen aus der Gleichung (14) die rekurrenten Beziehungen für die Signale im MWL:

$$\begin{bmatrix} U_i(t) \\ V_i(t) \end{bmatrix} = (t_i \rangle\langle t_i) \begin{bmatrix} U_{i-1}(t) \\ V_{i-1}(t) \end{bmatrix} + (h_i \rangle\langle h_i) \begin{bmatrix} U_{i-1}(t - \Delta t_i) \\ V_{i-1}(t - \Delta t_i) \end{bmatrix} , \qquad /15/$$

Dabei sind $U_{i-1}(t), V_{i-1}(t), U_1(t), V_i(t)$ Signale am Eingang bzw. am Ausgang des i-ten Elements des MWL. Für die Ausgangssignale des MWL gilt nämlich:

$$\begin{bmatrix} U_N(t) \\ V_N(t) \end{bmatrix} = (t_N \rangle\langle t_N) \begin{bmatrix} U_{N-1}(t) \\ V_{N-1}(t) \end{bmatrix} + (h_N \rangle\langle h_N) \begin{bmatrix} U_{N-1}(t - \Delta t_N) \\ V_{N-1}(t - \Delta t_N) \end{bmatrix} , \qquad /16/$$

und bei $t \leq 0$ ist $V_N(t) = U_N(t) = 0$

- 23 -

Im Zeitintervall $t_1 < t < (t_1 + \Delta t_N)$ erhalten die Signale am Ausgang des MWL gemäss dem Ausdruck (10) die Form:

$$\begin{bmatrix} U_N(t) \\ V_N(t) \end{bmatrix} = (t_N \!>\!<\! t_N) \begin{bmatrix} U_{N-1}(t) \\ V_{N-1}(t) \end{bmatrix} = \frac{U_{N-1}(t) + th\frac{X_N}{2} V_{N-1}(t)}{\sqrt{1 + th^2\frac{X_N}{2}}} \begin{bmatrix} 1 \\ th\frac{X_N}{2} \end{bmatrix} . \qquad /17/$$

Aus dem Ausdruck (17) folgt, dass die Beziehung $\frac{V_N(t)}{U_N(t)}$ im Zeitintervall $\Delta t_N$ vom Zeitpunkt $t_0$ der Signalankunft am Ausgang des MWL an konstant ist und folgenderweise definiert wird:

$$\frac{V_N(t)}{U_N(t)} = th\frac{X_N}{2} \quad , \quad t_0 < t < (t_0 + \Delta t_N) . \qquad /18/$$

So werden die Werte von $th\,\dfrac{X_N}{2}$ und $\Delta t_N$ ermittelt, von denen man die Werte von

$$sh\,X_N = \frac{2\tau_N}{\delta} \;\; ; \;\; K_N = \frac{\tau_N}{\psi} \;\; ; \;\; \Delta S_N = \frac{\Delta t_N\, C}{\sqrt{\delta^2 + (2\tau_N)^2}} \qquad /19/$$

gewinnt, worauf man nach den Beziehungen (10) und (18) die Vektoren $<\,t_N$ und $<\,h_N$ bestimmt.

Weiterhin sind die Signale $U_{N-1}(t)$ und $V_{N-1}(t)$ zu bestimmen. Zu diesem Zweck werden die Signale $U_N(t)$ und $V_N(t)$ nach dem folgenden Iterationsalgorithmus bearbeitet:

$$(t_N\!>\!<\! t_N)\begin{bmatrix} U_N(t) \\ V_N(t) \end{bmatrix} = t_N\!>\!\begin{cases} Q_1(t); & t > t_0 \\ 0; & t < t_0 \end{cases} , \cdot Q_1(t) = \frac{U_{N-1}(t) + th\frac{X_N}{2} V_{N-1}(t)}{\sqrt{1 + th^2\frac{X_N}{2}}} ,$$

$$(h_N\!>\!<\! h_N)\begin{bmatrix} U_N(t) \\ V_N(t) \end{bmatrix} = h_N\!>\!\begin{cases} 0; & t_0 < t < t_0 + \Delta t_N \\ Q_2(t); & t > t_0 + \Delta t_N \end{cases} , Q_2(t) = \frac{th\frac{X_N}{2} U_{N-1}(t) - V_{N-1}(t)}{\sqrt{1 + th^2\frac{X_N}{2}}} . \qquad /20/$$

Aus der zweiten Gleichung von (20) folgt die genaue Bestimmung der Zeitspanne $\Delta t_N$. Dann wird die Verschiebung (Verzögerung) der Zeit $t$ um die Grösse $\Delta t_N$ vorgenommen:

$$(t_N\!>\!)\,Q_1(t) \;\longrightarrow\; (t_N\!>\!)\,Q_1(t - \Delta t_N) \qquad /21/$$

- 24 -

und erfolgt die Addition:

$$(t_N >) Q_1 (t - \Delta t_N) + (h_N >) Q_2 (t - \Delta t_N) = \begin{bmatrix} U_{N-1}(t) \\ V_{N-1}(t) \end{bmatrix} , \qquad /22/$$

wobei man von der Beziehung (20) ausgeht. Der sich ergebende Vektor wird seinerseits der Behandlung nach den Ausdrücken (18)...(22) unterzogen. Im Ergebnis ermittelt man $K_{N-1}$, $\Delta S_{N-1}$ und den Vektor $\{[U_{N-2}; V_{N-2}]\}^T$. Die Iterationen werden bis zum N-ten Schritt wiederholt, nach dem man den Vektor $\{[U_o(t); 0]\}^T$ erhält, der das Bezugssignal am Ausgang des MWL darstellt.

Der angegebene Iterationsalgorithmus begründet also theoretisch die prinzipielle Möglichkeit, die Verteilungen K(S) des zu kontrollierenden Parameters längs der vorgegebenen Koordinate S mit Hilfe eines Zweimoden-MWL mit einem Bezugssignalkanal und einem Messkanal zu erhalten, die in Abhängigkeit von der Änderung des zu kontrollierenden Parameters (der Krümmung K(S) der Achse der Rohrleitung 1) in Wechselwirkung stehen. Im Falle einer ebenen Biegung der Rohrleitung 1 wird die Verteilung des Biegemoments mit Hilfe der aus der Mechanik bekannten Beziehung

$$M(S) = E \cdot J \cdot K(S) \text{ ermittelt, wobei } E \cdot J$$

die Biegesteifigkeit der Rohrleitung 1 ist.

Bekanntlich ist M(S) eine der wichtigsten mechanischen Charakteristiken, die den inneren gespannt-verformten Zustand der Rohrleitung 1 bestimmen. Dies beweist die Möglichkeit, den MWL als sensibles Element und gleichzeitig als Leitung zur Übertragung der Information über Änderungen des zu kontrollierenden Parameters in der Kontrollzone für die nachfolgende Ermittlung der physikalisch-mechanischen Charakteristiken des Zustands eines langgestreckten Objekts zu benutzen.

Um also die physikalisch-mechanischen Charakteristiken eines langgestreckten Objekts 1 längs der vorgegebenen Koordinate S zu ermitteln, nach deren Länge die Änderung des zu kontrollierenden Parameters erfolgt, wird

- 25 -

die Amplitude des elektrischen Signals am Ausgang des
Bezugssignalkanals ausgekoppelt, wird das am Ausgang
des Messkanals erscheinende elektrische Signal umgekehrt
proportional der Grösse des elektrischen Signals am Ausgang des Bezugssignalkanals verstärkt und wird die lineare Masstabtransformation benutzt, welche die Differenzgrösse von Verzögerungen der Modenphasengeschwindigkeiten
des Bezugssignalkanals und des Messkanals der langen
Wellenenergie-Übertragungsleitung 3 mit der laufenden
Zeit der Kontrolle und mit der Ablesung von Werten der
Koordinate S längs der langen Wellenenergie-Übertragungsleitung 3 verknüpft.

Im folgenden werden Forderungen an den MWL und an
das Bezugssignal begründet, deren Erfüllung den Betrieb
des MWL als lineares Messgerät entsprechend der Gleichung
(6) ermöglicht. Zu diesem Zweck soll die in den Gleichungen (8)...(10) benutzte Matrix $[S]$ als Polynommatrixreihe
nach den Potenzen der Grösse th $\frac{x_i}{2}$ dargestellt werden:

$$[S] = e^{-pt_o}\Theta\left\{\begin{bmatrix}1 & 0 \\ 0 & e^{-pt_{0N}}\end{bmatrix} + \sum_{i=0}^{N}\begin{bmatrix}1 & 0 \\ 0 & e^{-p\Delta t_{oi}}\end{bmatrix}\begin{bmatrix}0 & -\Delta z_i \\ \Delta z_i & 0\end{bmatrix}\begin{bmatrix}1 & 0 \\ 0 & e^{-p\Delta t_{i+1,N}}\end{bmatrix} + \right.$$

$$+ \sum_i\sum_{\substack{j \\ i<j}}\begin{bmatrix}1 & 0 \\ 0 & e^{-pt_{oi}}\end{bmatrix}\begin{bmatrix}0 & -\Delta z_i \\ \Delta z_i & 0\end{bmatrix}\begin{bmatrix}1 & 0 \\ 0 & e^{-pt_{i+1,j}}\end{bmatrix}\begin{bmatrix}0 & -\Delta z_j \\ \Delta z_j & 0\end{bmatrix}\begin{bmatrix}1 & 0 \\ 0 & e^{-p\Delta t_{j+1,N}}\end{bmatrix} +$$

$$+ \sum_i\sum_j\sum_{\substack{k \\ i<j<k}}\begin{bmatrix}1 & 0 \\ 0 & e^{-pt_{oi}}\end{bmatrix}\begin{bmatrix}0 & \Delta z_i \\ \Delta z_i & 0\end{bmatrix}\begin{bmatrix}1 & 0 \\ 0 & e^{-pt_{i+1,j}}\end{bmatrix}\begin{bmatrix}0 & -\Delta z_i \\ \Delta z_i & 0\end{bmatrix}\begin{bmatrix}1 & 0 \\ 0 & e^{-pt_{i+1,k}}\end{bmatrix}\times$$

$$\times \begin{bmatrix}0 & -\Delta z_k \\ \Delta z_k & 0\end{bmatrix}\begin{bmatrix}1 & 0 \\ 0 & e^{-p\Delta t_{k+1,N}}\end{bmatrix} + ... \qquad ,$$

Dabei sind /23/

$$\Theta = \prod_{i=1}^{N}\frac{1 + th\frac{x_i}{2}\, th\frac{x_{i+1}}{2}}{\sqrt{1 + th^2\frac{x_i}{2}}\,\sqrt{1 + th^2\frac{x_{i+1}}{2}}} \;;$$

$$x_o = 0; \qquad\qquad x_{N+1} = 0; \quad t_{ij} = \sum_{m=i}^{m=j}\frac{\Delta S}{c}\sqrt{\delta^2 + (2z_m)^2} = \sum_{m=i}^{m=j}\Delta t_m;$$

$$\Delta z_i = \frac{th\frac{x_i}{2} - th\frac{x_{i+1}}{2}}{1 + th\frac{x_i}{2}\,th\frac{x_{i+1}}{2}} \simeq \frac{z(S_i) - z(S_{i+1})}{\delta}$$

Der Faktor $\Theta$ bezeichnet die Verringerung der Ampli-

- 26 -

tude des Bezugssignals und des Messignals infolge des Leistungsverbrauchs für die Messung. Das erste Glied der Reihe entspricht dem direkten Durchlauf des Signals im Bezugssignalkanal und im Messkanal ohne ihre Wechselwirkung. Das zweite Glied bildet die lineare additive Komponente des Messignals, während die anderen N-2 Glieder die multiplikative Komponente im Bezugs- und im Messignal bilden, die einen Fehler bei der linearen Messung darstellt. Wie aus der Gleichung (23) folgt, wird der multiplikative Zusatz zum Messignal durch die nichtdiagonalen geradzahligen Reihenglieder vom vierten Glied an bestimmt. Das Leitglied des multiplikativen Zusatzes hat den Wert $\Delta r_i \Delta r_j \Delta r_k$, und sein Maximalwert ist vom Spektrum der zu messenden Grösse wesentlich abhängig.

Für die Nichtresonanzspektren hat der multiplikative Zusatz den Maximalwert $\frac{r^3_{max}}{4}$, und für die Resonanzspektren mit einer Periode $T_c$ der Zentralfrequenz beträgt sein Maximalwert $\frac{n^2}{4} \cdot (\Delta r_n)^3$, wobei $n = \frac{L}{T_c}$ ist. Der erforderliche dynamische Messbereich D bei der Messung des zu kontrollierenden Parameters wird gewöhnlich folgenderweise bestimmt:

$$D = \frac{r_{max}}{r_{min}} = \frac{K_{max}}{K_{min}} .$$

Dabei ist $r_{max}$ der Maximalwert des Koppelfaktors längs des MWL, der dem maximal möglichen Wert des zu messenden Parameters $K_{max}$ entspricht, und $r_{min}$ bezeichnet den Minimalwert des Koppelfaktors, welcher dem Minimalwert des zu messenden Parameters $K_{min}$ entspricht, der auf dem Hintergrund verschiedenen Rauschens erkannt werden muss. Dann gelten folgende Beziehungen:

$$D \leq \frac{r_{max} \cdot 4\delta^2}{(\Delta r_{max})^3} \quad , \quad r_{max} \leq \frac{2\delta}{\sqrt{D}} \quad , \qquad /24/$$

bei deren Einhaltung der Maximalwert $r_{max}$ des Kopplungsfaktors die Betriebsart der linearen Messung des zu kontrollierenden Parameters gewährleistet.

- 27 -

Die Bestimmung der Forderungen an das Bezugssignal wird im folgenden auf Grund der Betrachtung der additiven Komponente des Signals am Ausgang des MWL angeführt, die vom ersten und zweiten Glied der Reihe (23) gebildet wird:

$$\begin{bmatrix} U_N(p) \\ V_N(p) \end{bmatrix} = [S] \begin{bmatrix} U_o(p) \\ 0 \end{bmatrix} \cong \sum_{i=1}^{N} e^{-pt_o} \Theta \begin{bmatrix} 1 & e^{-pt_i} & \frac{\Delta z_i e^{-pt_{i-1,N}}}{e^{-pt_{oN}}} \\ \Delta z_i e^{-pt_i} & & \end{bmatrix} \begin{bmatrix} U_o(p) \\ 0 \end{bmatrix} \qquad /25/$$

Darin sind $U_N(p) = e^{-pt_o} \Theta U_o(p)$ ; $V_N(p) = e^{-pt_o} \Theta \sum_{i=1}^{N} \Delta z_i e^{-pt_i} U_o(p)$.

Um weitere Erläuterungen zu konkretisieren, wird als Bezugssignal ein Hochfrequenzimpuls mit einer Füllfrequenz $\omega_o$ gewählt, d.h. wird ein elektromagnetisches Feld benutzt, das sich als Welle im Bezugssignalkanal des MWL fortpflanzt und das Bezugssignal darstellt, welches in der komplexen Form durch den Ausdruck

$$\dot{U}_N(t) = \Theta U_o(t) \cdot e^{-j\omega_o(t-t_o)} = U_N(t) \cdot e^{-j\omega_o(t-t_o)} \qquad /26/$$

dargestellt werden kann, in dem $U_N(t)$ die Umhüllende des Bezugssignals ist. Nach Laplace wird $\dot{U}_N(t)$ als $U(p - j\omega_o)$ dargestellt.

Die Laplace-Reziprokaltransformation nach $V_N(p)$ vom Ausdruck (25) bestimmt unter Berücksichtigung der Gleichung (26) das Messignal:

$$\dot{V}_N(t) = \sum_{i=1}^{N} \dot{U}_N(t)(t-t_i)\Delta z_i = \sum_{i=1}^{N} U_N(t-t_i)\Delta z_i \, e^{j\omega_o(t-t_i)}, \qquad /27/$$

wobei t von $t_o$ an gezählt wird. Aus der Gleichung (23) lässt sich $t_{i,j} = t_{oN} = \sum_{i=0}^{N} \Delta t_i = T$ ermitteln. Wenn man dann den Ausdruck (27) durch $\Delta t_i$ dividiert und damit multipliziert sowie zum Grenzwert bei $\frac{T}{\Delta t_i} = N \rightarrow \infty$, $\Delta t_i \rightarrow 0$ übergeht, erhält man den Ausdruck für $V_N(t)$ bei stetigen Werten von r(t):

$$\dot{V}_N(t) = e^{j\omega_o t} \int_0^t U_N(t-\Theta) \frac{z'(\Theta)}{\delta} \cdot e^{-j\omega_o\Theta} d\Theta = e^{j\omega_o t} \int_{t-\tau}^t U(t-\Theta) \frac{z'(\Theta)}{\delta} \cdot e^{-j\omega_o\Theta} d\Theta, \qquad /28/$$

darin ist $z'(\Theta) = \frac{\partial z(\Theta)}{\partial \Theta}$.

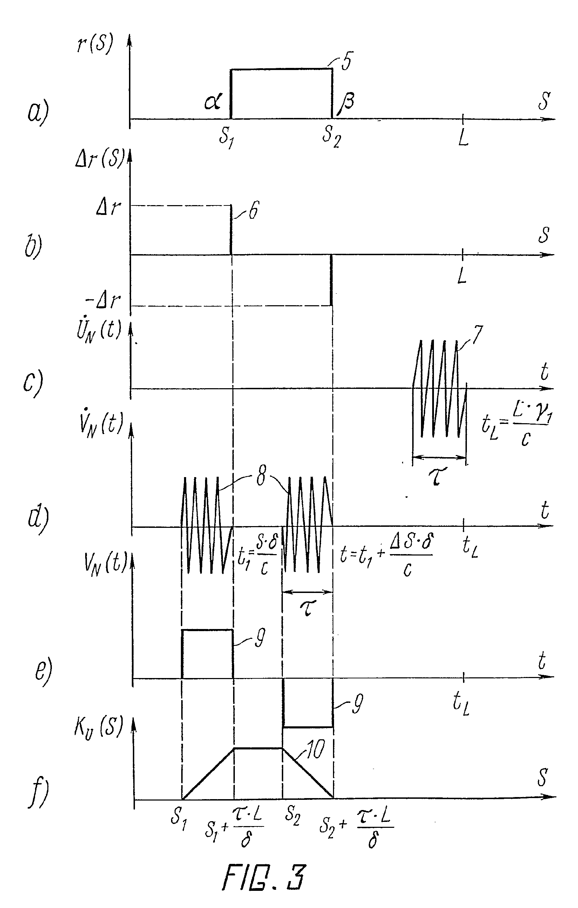

Fig. 3a, b, c, d, e, f zeigt Kennlinien und Diagramme von Signalen im MWL bei der Realisierung des Verfahrens zur Kontrolle des Zustands von langgestreckten Objekten. Die Charakteristiken und Diagramme veranschaulichen die grundlegenden analytischen Beziehungen zur Begründung des Verfahrens und des Algorithmus der Signalverarbeitung zwecks Erhaltung von Daten über den zu kontrollierenden Parameter.

Das Diagramm 5 in Fig. 3 a stellt die Abhängigkeit des Kopplungsfaktors $r(S) = \psi K(S)$ im MWL dar, die der in Fig.2 gezeigten Verteilung der Krümmung K(S) entspricht. Fig. 3 b zeigt die Kennlinie 6 für die Verteilung der Änderungsgeschwindigkeit des Kopplungsfaktors $\Delta r(S) \simeq \frac{\partial r(S)}{\partial S}$ dS $= \psi \frac{\partial K(S)}{\partial S}$ dS als Diracsche Delta-Funktion mit dem Gewicht $\Delta$ r. Das Bezugssignal 7 mit einer Füllfrequenz $\omega_0$ und einer Dauer $\tau$ ist in Fig. 3 c dargestellt, während das Messignal 8 und seine Umhüllende 9 unter Berücksichtigung der Phase der Füllung von Hochfrequenzimpulsen in Fig. 3 d bzw. e eingezeichnet sind. Dieses Signal 8 erhält man durch unmittelbares Einsetzen der Delta-Funktion in die Gleichung (28). Die Abtrennung der Umhüllenden 9 kann z.B. durch Synchrondemodulation erfolgen. Die Lage der Messignalimpulse 8 an der Zeitachse t (Fig. 3d) in Bezug auf die Vorderflanke des Bezugssignals 7 (Fig. 3c) findet man mittels der Beziehung $S = \frac{tc}{\delta}$. Die Integrierung der Umhüllenden 9 nach der Zeit t und die Umrechnung von t in S mit Hilfe der linearen Masstabtransformation ergeben die zu kontrollierende Verteilung der Krümmung K(S) längs der vorgegebenen Koordinate, wie dies die Kennlinie 10 in Fig. 3 f zeigt. Somit veranschaulicht Fig. 3 a, b, c, d, e, f die wichtigsten Operationen des Verfahrens zur Kontrolle des Zustands von langgestreckten Objekten, deren Realisierbarkeit in der theoretischen Begründung bewiesen wird.

Die wichtigsten Charakteristiken des Messvorganges bei der Durchführung der Kontrolle sind auch die Genauigkeit und das Auflösungsvermögen.

- 29 -

Die Genauigkeit der Messung wird vom nichtidealen Charakter der Verteilungsfunktion K(S) der Krümmung sowie durch die Dauer und Ausdehnung des Bezugssignals längs der Koordinate S beeinflusst, wobei davon auch das Auflösungsvermögen der Messung bei der Kontrolle abhängig ist. Die entsprechend dem Kontrollverfahren vorgesehene Normierung des Messsignals erfolgt nach der Amplitude der Umhüllenden des Bezugssignals $U_N(t)$ am Ausgang des MWL. Aus den Gleichungen (27) und (28) folgt also die Differentialbeziehung zwischen dem zu messenden Parameter und der Messignalumhüllenden, die nach der Bezugssignalamplitude normiert ist:

$$V(t) = \frac{u_N(0)}{\delta} \cdot \frac{z(t) - z(t+\tau)}{\tau} \cdot \tau \cong \frac{u_N(0)}{\delta} \cdot z'(t) \cdot \tau \,, \quad (29)$$

wobei $r'(t) = \frac{\partial z(t)}{t}$ ist, $r_{max} = \frac{2\delta}{\sqrt{D}}$ gesetzt wird und

$$\frac{r(t)}{r_{max}} = \frac{K(t)}{K_{max}} \, ; \quad r(t) = \frac{K(t)}{K_{max}} = \frac{2\delta}{\sqrt{D}} \, ; \quad \frac{\partial K(t)}{\partial t} =$$

$$= \frac{V(t) \, K_{max} \sqrt{D}}{U_N(0) \, \tau} \text{ berücksichtigt werden.}$$

In diesem Ausdruck sind V(t) und $U_N(0)$ die Amplituden des Messignals und des Bezugssignals, die nach der Leistung des Bezugssignals am Eingang des MWL normiert sind.

Um die erforderliche Auflösung $\Delta S$ zu gewährleisten, muss das Bezugssignal $U_N(t)$ einen Impuls darstellen, dessen Breite $\tau$ der Bedingung

$$\tau \leqslant \frac{\Delta S}{c} \delta \qquad (30)$$

genügt.

Neben den Forderungen an die Linearität, an das Auflösungsvermögen und an die Messgenauigkeit bei der Kontrolle beweist die oben angeführte theoretische Begründung die Realisierbarkeit des angemeldeten Verfahrens zur Kontrolle des Zustands von langgestreckten Objekten, die Richtigkeit der Darlegung der wichtigsten Unterscheidungsmerkmale, der Reihenfolge der Operationen und somit der Lösung der gestellten Aufgabe.

Zur Erweiterung des dynamischen Messbereichs des zu

-30-

kontrollierenden Parameters auf das Gebiet seiner Minimalwerte werden in der langen Wellenenergie-Übertragungsleitung 3 wenigstens ein Bezugssignalkanal und mindestens ein Messkanal mit gleichen Verzögerungszeiten der Modenphasengeschwindigkeiten vorgesehen. Die lange Wellenenergie-Übertragungsleitung wird nach ihrer Länge in Abschnitte $\ell$ eingeteilt. Zwischen den Abschnitten wird eine konstante zeitliche Verzögerung des Signals in einem der Kanäle gewährleistet, und man misst den Integralwert des zu kontrollierenden Parameters in den gewählten Abschnitten $\ell$ , das heißt bei der Messung kleiner Werte des zu kontrollierenden Parameters, der auf einer grossen Länge verteilt ist und dessen lokale Werte ausserhalb der Messgrenzen liegen, muss der Integralwert des zu kontrollierenden Parameters in den gewählten Abschnitten eines langgestreckten Objekts gemessen werden. Um dies zu realisieren, wird der MWL im gewählten Abschnitt $\ell$ als Zweikanalleitung mit gleichen Ausbreitungskonstanten in den Kanälen, also mit $\delta = 0$ ausgeführt. Dabei wird die Streumatrix $[S_i]$ eines Elementarabschnitts des MWL mit einer Länge von $\ell$ aus dem Ausdruck (9) durch Limitierung $\delta \to 0$ bestimmt:

$$\delta \to 0 \quad [S_i] = e^{-p\Delta t}[T]\begin{bmatrix} 1 & 0 \\ 0 & e^{-p\Delta t_i z(S_i)} \end{bmatrix}$$

Dabei ist $[T] = \begin{bmatrix} 1 & 1 \\ 1 & -1 \end{bmatrix}\frac{1}{\sqrt{2}}$

$$[S_\ell] = [T]\begin{bmatrix} 1 & 0 \\ 0 & e^{-\frac{P}{L}\sum\limits_{i=1}^{N} z_i \Delta t_i} \end{bmatrix}[T] e^{-pt_\ell} = e^{-pt_\ell}[T]\begin{bmatrix} 1 & 0 \\ 0 & e^{-\frac{P\beta}{C}\int_0^\ell z(s)ds} \end{bmatrix}[T],$$

$$\lim N \to \infty ; \Delta t_i \to 0 \quad ; \quad t_\ell = \frac{\beta \ell}{C}$$

und die Darstellung des Bezugssignals V(p) ergibt sich aus dem Ausdruck (2) unter der Bedingung, dass $\delta = 0$ ist:

$$V(p) = U(p) \cdot e^{-pt_\ell}(1 - e^{-\frac{P\beta}{C}\int_0^\ell z(s)ds}) \cdot \frac{1}{2}.$$

Auf der Trägerfrequenz $w_0$ kann das Messignal in der Zeit ähnlicherweise wie oben in der Form

$$\dot{V}(t) \cong U_c(t) \frac{[1 - e^{-j\frac{\omega_o \beta}{c}\int_o^\ell \dot{z}(s)ds} \cdot e^{j\omega_o(t-t_\ell)}]}{2} \cong j U_o(t)\frac{1}{2}\frac{\omega_o \beta}{c}\int_o^\ell \dot{z}(s)ds \cdot e^{j[\omega_o(t-t_\ell)-\varphi_\ell]}$$

/3I/

dargestellt werden, wobei $\quad \varphi_\ell = \frac{\beta\omega_o}{c}\int_o^\ell \dot{z}(s)ds$

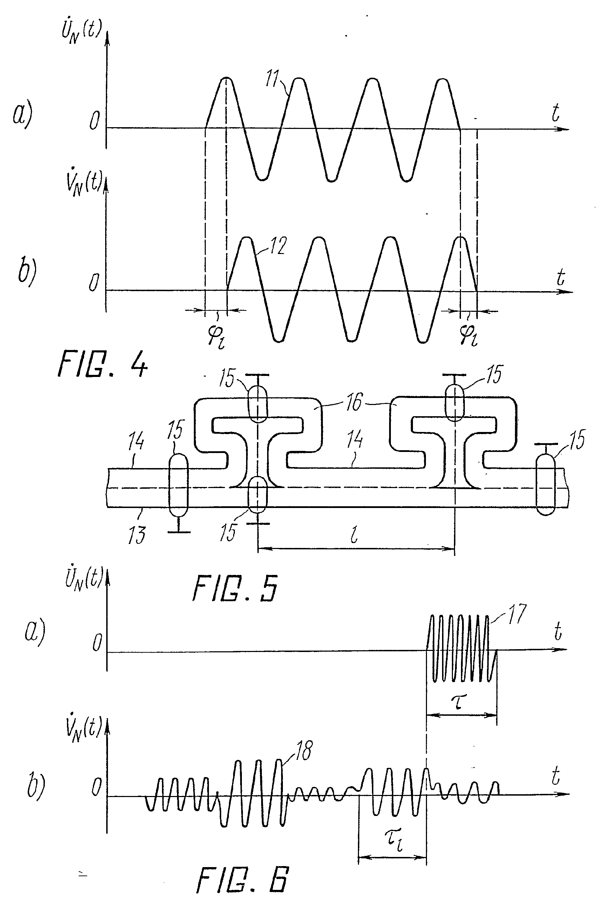

Damit unterscheidet sich das Bezugssignal 11 (Fig. 4a) zeitlich von der Lage des Messignals 12 (Fig. 4b) nur durch die Phase $\varphi_\ell$ der füllenden Hochfrequenz-Schwingungen. Seine Amplitude ist dem Integral von dem zu messenden Parameter nach der Länge $\ell$ des MWL-Abschnitts proportional. Durch konstruktive Ausführung des MWL sieht man in ihm einen Bezugssignalkanal 13 (Fig. 5a) und einen Messkanal 14 vor. Um die Messignale von jedem Abschnitt mit der Länge $\ell$ am Ausgang des MWL zeitlich zu selektieren, wird in den Bezugssignalkanal 13 oder in den Messkanal 14, die ein geerdeter Schirm 15 umfasst, ein zusätzlicher Abschnitt eines Einmoden- und Einkanal-Wellenleiters eingeführt, der eine Verzögerungsschleife 16 für diesen Kanal ( hier für den Messkanal) zur Verzögerung um die maximale Dauer $\tilde{\iota} = \frac{\ell}{c} - \beta$ des Bezugssignals bildet, wobei die Verlangsamung der Phasengeschwindigkeiten von Moden des Bezugssignalkanals und des Messkanals des MWL bezeichnet. Die Dauer des Bezugssignals muss so sein, dass dieses Signal im Raum eine Länge ausfüllt, die nicht grösser als die Länge des MWL-Abschnitts ($\tilde{\iota}_\ell \geqslant \tilde{\iota}$) ist. In Fig. 5 ist die Schleife 16 in den Messkanal 14 eingeführt.

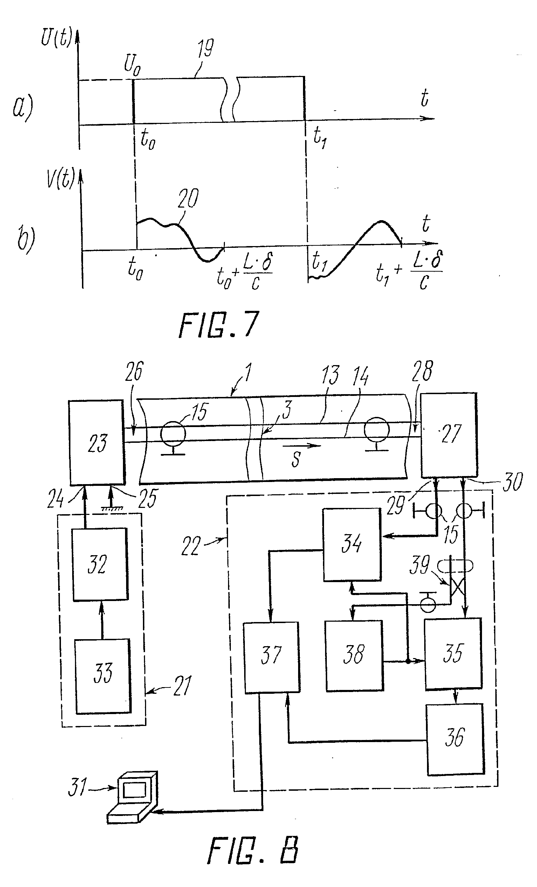

Die zeitlichen Zusammenhänge zwischen den Signalen in einem solchen MWL zeigt Fig. 6a, b. Der Signalverlauf 17 (Fig. 6a) entspricht dem Bezugssignal am Ausgang des MWL, und die Kurve 18 (Fig. 6b) dem Messignal, welches eine Folge von Impulsen darstellt, deren Amplitude dem Integralwert des im Abschnitt mit der Länge $\ell$ zu messenden Signals entspricht, das in Hinsicht auf das Bezugssignal um die Zeit $i\tilde{\iota}_\ell$ verzögert ist, wobei $\tilde{\iota}_\ell$ die Zeit der Verzögerung in der Schleife 16 (Fig. 5) und i die vom Ende des MWL gezählte Abschnittsnummer bedeuten.

- 32 -

Zur Erhaltung eines elektrischen Signals, welches dem zu messenden Parameter entspricht, wird vorgeschlagen, einen Videoimpuls (ohne hochfrequente Füllung) als Bezugssignal zu benutzen. Dabei muss man für den MWL Leitungen anwenden, welche die Videosignalübertragung ermöglichen, also keine Schnittfrequenzen haben. Zu solchen Leitungen gehören Koaxial-Übertragungsleitungen, Mehrleiter-Funkkabel u.a. Dadurch wird die anfängliche Signalbearbeitung wesentlich vereinfacht, wobei auch keine UHF- und anderen Quellen erforderlich sind.

In diesem Falle ist $W_o = 0$, und für $V_N(t)$ ergibt sich der folgende Ausdruck:

$$V_N(t) = \frac{1}{2\pi j} \int_{\alpha-j\infty}^{\alpha+j\infty} \frac{p\, U(p)}{c} \cdot \left( p\frac{\delta}{c} \right) \cdot e^{pt}\, dp \; . \qquad /32/$$

Wenn man als Bezugssignal den Spannungs-Einheitssprung 19 (Fig. 7a) $U(t-t_o) = \begin{cases} U_o; & t \geq t_c \\ 0; & t < t_c \end{cases}$ mit einer Bildfunktion $U(p) = \frac{U_o}{p} e^{-pt_o}$ wählt, erhält man aus (32) die unmittelbare Abbildung des zu kontrollierenden Parameters im Messignal 20 (Fig. 7b):

$$V(t) = \frac{1}{\delta} U_o \, \mathcal{E} \left( \frac{t \cdot c}{\delta} \right), \; t_o \leq t \leq \frac{4\delta}{c} \; . \qquad /33/$$

Das Ende des Einheitssprunges 19 bei $t = t_1$ erzeugt ebenfalls das Messignal 20, aber mit entgegengesetztem Vorzeichen. Also wird in diesem Falle als Bezugssignal z.B. ein Videoimpuls mit einer Dauer $T \geq \frac{L}{c} \cdot \delta$ und einer Folgefrequenz $F \leq \frac{1}{2T}$ gewählt. Als kontrollierbare Parameter können Temperatur oder Druck oder Feuchtigkeit oder Dichte oder Salzigkeit sowie ihre Kombinationen benutzt werden.

Wenn bei der Kontrolle Druck $P^o(S)$ oder Temperatur $t^o(S)$ in der Kontrollzone längs eines langgestreckten Objekts 1 benutzt wird, so ist in den MWL ein Stoff einzuführen, der mit seinen elektrooptischen Kennwerten auf die Variationen der genannten Parameter reagiert.

Zur Zeit ist eine ausreichend grosse Anzahl von dielektrischen Stoffen bekannt, deren Dielektrizitätskonstante von Temperatur oder Druck des umgebenden Mediums wesentlich abhängt. Solche Stoffe, die in der Regel Piezoelektrika oder Seignettelektrika darstellen, können als Grundstoff zur Teilfüllung der UHF- und optischen Wellenleiter dienen. Wenn man einen der Kanäle, vorzugsweise den Messkanal 14 mit einem solchen Dielektrikum voll oder teilweise füllt, erhält man einen MWL, bei dem die Differenz $S$ von Verzögerungszeiten der Phasengeschwindigkeiten von Moden des Bezugssignalkanals und des Messkanals je nach der Temperatur- oder Druckabweichung längs eines langgestreckten Objekts der Kontrolle von einem gewählten Mittelwert nach S modulliert ist. Um den funktionalen Zusammenhang zwischen den Druck- oder Temperaturvariationen und der Messignalstruktur im MWL in der Zeit zu bestimmen, wird die Abhängigkeit der Grösse $\delta$ vom Druck $P^o$ oder von der Temperatur $t^o$ in Form des Ausdrucks

$$\delta(P^o, t^o) = \delta + \frac{\partial \delta [P^o(S); t^o(S)]}{\partial (P^o; t^o)} \cdot (P^o; t^o), \qquad /34/$$

vorgegeben, in dem $P^o(S)$ und $t^o(S)$ die Abweichungen der Grössen $P^o$ und $t^o$ vom Mittelwert derselben Grössen längs des langgestreckten Objekts bedeuten. Weiterhin ist es erforderlich, dass zwischen dem Bezugssignalkanal und dem Messkanal bei $P^o(S) = 0$ und $t^o(S) = 0$ die Wechselwirkung mit einem Koppelfaktor $r(S) = const = r$ gewährleistet wird, die der Bedingung $r \ll \delta$ (wenigstens um eine Grössenordnung) entspricht. Dann wird die Streumatrix $[S_i]$ eines Elementarabschnitts des MWL mit einer Länge $\Delta S$ bei Änderung von $P^o$ oder $t^o$ unter Berücksichtigung der Ausdrücke (9), (10) und (34) bestimmt:

$$[S_i] \cong \begin{bmatrix} 1 & -\frac{z}{\sqrt{\left(\frac{\delta}{2}\right)^2 + z^2}} \cdot e^{-\frac{2\Delta S}{c} \rho \sqrt{\left(\frac{\delta}{2}\right)^2 + z^2}} \\ \frac{z}{\delta^2 + z^2} e^{-\frac{2\Delta S}{c} \rho \sqrt{\delta^2 + z^2}} & e^{-\frac{2\Delta S}{c} \rho \sqrt{\left(\frac{\delta}{2}\right)^2 + z^2}} \end{bmatrix} \quad /35/$$

- 34 -

Die Kopplung zwischen dem Bezugssignalkanal und
dem Messkanal infolge der Variationen von $\tilde{\delta}$ gemäss (34)
wird durch den nachstehenden Ausdruck charakterisiert:

$$z(S) = \frac{z}{\sqrt{\left(\frac{\delta^2}{2}\right)^2 + z^2}} + \frac{1}{2} \frac{\delta}{\sqrt{\left(\frac{\delta^2}{2}\right)^2 + z^2}} \frac{\partial \delta}{\partial(\rho^\circ; t^\circ)}[\rho^\circ(S); t^\circ(S)] - \frac{1}{2} \frac{\Delta S}{c} \frac{\rho z}{\sqrt{\left(\frac{\delta^2}{2}\right)^2 + z^2}} \frac{\partial \delta}{\partial(\rho^\circ; t^\circ)}[\rho^\circ(S); t^\circ(S)]$$

Wenn man die sehr kleinen Glieder und die nach S konstanten Glieder weglässt, erhält man den Ausdruck für
$[S_i]$ , der bei

$$x_i = Arcsh\left[\frac{1}{2} \frac{\delta}{\sqrt{\frac{\delta^2}{2} + z^2}} \frac{\partial \delta}{\partial(\rho^\circ; t^\circ)}[\rho^\circ(S); t^\circ(S)]\right] \qquad /36/$$

mit der Beziehung (9) zusammenfällt.

Ähnlicherweise wie für die Krümmung kann man dann
die Verteilung der zu kontrollierenden Temperatur oder
des Druckes in der Art von Verteilungen von $P^\circ(S)$ und
$t^\circ(S)$ längs der am MWL vorgegebenen Koordinate mit Hilfe
der in der Kontrollzone des langgestreckten Objekts angeordneten Leitung erhalten.

Aus der obigen theoretischen Begründung der Realisierbarkeit des Verfahrens zur Kontrolle des Zustands
von langgestreckten Objekten folgt offensichtlich die
mögliche Lösung der gestellten Aufgabe. Als Beweis
dafür dient die Möglichkeit, die Fernkontrolle über
wirklich grosse Entfernungen vom langgestreckten Objekt
(bis zu Hunderten Kilometern) bei Benutzung des optischen Wellenbereichs und auch bei grosser Länge (bis
zu Hunderten Kilometern) der langgestreckten Objekte
selbst und folglich der Kontrollzone zu verwirklichen.
Dies wird z.B. mit Hilfe von jetzigen optischen Faserleitungen bei ihrer Benutztung als MWL erreicht. Die
Erweiterung der Arten und der Messbereiche der zu kontrollierenden Parameter bei gleichzeitiger Erhöhung der
Messgenauigkeit und der Auflösung bestätigt die universelle Anwendung des Verfahrens hinsichtlich der Natur
der zu kontrollierenden Parameter sowie der erreichte
Zusammenhang mit den Strukturen des benutzten Bezugs-

- 35-

signals und des Messignals sowie mit den Kennwerten des MWL. Die Erhöhung der Schnellwirkung und die Verringerung des Energieverbrauchs werden beim angemeldeten Verfahren dadurch erreicht, dass die notwendig gewesene elektrische Speisung von Sensoren entfällt und die Funktionen des sensiblen Elements und des Mittels zur Informationsübertragung in einem MWL z.B. für den optischen Wellenbereich zusammengefasst werden.

Die Einrichtung zur Kontrolle des Zustandes von langgestreckten Objekten enthält eine Quelle 21 modulierter Wellenenergie, eine lange Wellenenergie-Übertragungsleitung 3, die in der Zone der Kontrolle des langgestreckten Objektes 1, z.B. einer Rohrleitung längs der vorgegebenen Koordinate S angeordnet und zur Erfassung und Übertragung von Informationen über Änderungen des zu kontrollierenden Parameters K(S) bestimmt ist. Die lange Wellenenergie-Übertragungsleitung 3 ist als Multimodewellenleiter mit wenigstens einem Bezugssignalkanal 13 und mindestens einem Messkanal 14 ausgebildet, die abhängig von der Änderung des zu kontrollierenden Parameters K(S) zusammenwirken.

Die Einrichtung zur Kontrolle des Zustandes von langgestreckten Objekten enthält einen Informationsverarbeitungsblock 22, der dazu vorgesehen ist, um aus der langen Wellenenergie-Übertragungsleitung 3 ein durch diese Leitung 3 umgewandeltes Bezugssignal zu gewinnen, nach dem physikalisch-mechanische Charakteristiken des Zustandes des langgestreckten Objektes 1 ermittelt werden. Die Einrichtung enthält auch ein Raumwellenfilter 23, das zur Erzeugung eines Bezugssignals mit räumlich-zeitlicher Struktur der vorgegebenen Mode dient und zwischen dem Ausgang der modulierten Wellenenergiequelle 21 und der langen Wellenenergie-Übertragungsleitung 3 geschaltet ist. Das Raumwellenfilter 23 weist Eingänge 24, 25 auf, wobei das Gebiet, in dem das Raumwellenfilter 23 mit der langen Wellenenergie-Übertragungsleitung 3 verbunden ist, mit 26 bezeichnet ist.

Die Einrichtung zur Kontrolle des Zustandes von langgestreckten Objekten enthält ein Raumwellenfilter 27, das zur Umwandlung eines vom Ausgang der langen Wellenenergie-Übertragungsleitung 3 erhaltenen Signals mit räumlich-zeitlicher Struktur der vorgegebenen Mode in ein zeitabhängiges Signal vorgesehen und mit der langen Leitung 3 über ein Gebiet 28 verbunden und zwischen der langen Leitung 3 und den Eingängen des Informationsverarbeitungsblockes 22 angeordnet ist. Das Raumwellenfilter 27 hat Ausgänge 29, 30.

Die Raumwellenfilter 23, 27 sind identisch ausgeführt und können in an sich bekannter Weise je nach Typ der langen Wellenenergie-Übertragungsleitung 3 realisiert sein. So stellt beispielsweise für eine Leitung 3, die als Rechteckhohlleiter ausgebildet ist und in der $H_{10}$-, $H_{20}$- Wellen als Bezugssignal- und Messkanal benutzt werden, das Filter 23 oder 27 eine mit dem Wellenleiter in Reihe geschaltete 3-Dezibel-Spaltbrücke (nicht gezeigt) dar, deren Arme an den Wellenleiter über zwei statische Phasenschieber mit einer Differentialphasen-drehung von $\pi/2$ angeschlossen sind. Für den optischen Bereich sind die Ausführungsbeispiele und Prinzipien zum Aufbau von Wellenmodenfiltern in der Arbeit (J. of the optical society of America, N. 60, N.9, 1980, N.S.Kapany, et al. "Filter optics. XII. A technique for launching an arbitrary mode on an optical dielectric waveguide". p. 1182) behandelt.

Die Einrichtung zur Kontrolle des Zustandes von langgestreckten Objekten enthält ausserdem ein Videoterminal 31, das zur Wiedergabe der ermittelten physikalisch-mechanischen Cahrakteristiken dient und mit seinem Eingang an den Ausgang des Informationsverarbeitungsblockes 22 angeschlossen ist.

Die modulierte Wellenenergiequelle 21 enthält einen Generator 32, dessen Ausgang mit dem Eingang des Wellenraumfilter 23 in Verbindung steht, einen Modulator 33, dessen Ausgang an den Eingang des Generators 32 geschal-tet ist.

- 37 -

Als modulierte Wellenenergiequelle 21 kann ein standardisierter Generator zur Erzeugung von Schwingungen eines physikalischen Feldes, z.B. ein Laser (optischer Maser), ein UHF-Generator, ein Generator für elastische Schwingungen eingesetzt werden.

Der Informationsverarbeitungsblock 22 enthält synchrone Detektoren 34, 35, deren erste Eingänge jeweils mit den Ausgängen 29, 30 des Raumwellenfilters 27 verbunden sind, einen Operationsverstärker 37, dessen erster Eingang an den Ausgang des Integrators 36 angeschlossen ist und dessen Ausgang am Eingang des Videoterminals 31 liegt. Der Eingang des Integrators 36 ist an den Ausgang des synchronen Detektors 35 angeschlossen. Der zweite Eingang des Operationsverstärkers 37 steht mit dem Ausgang des synchronen Detektors 34 in Verbindung. Der Block 22 ist mit einem Überlagerungsoszillator 38 versehen, dessen Ausgang mit den zweiten Eingängen der synchronen Detektoren 34, 35 verbunden ist.

Die Einrichtung zur Kontrolle des Zustandes von langgestreckten Objekten enthält einen Richtkoppler 39, der zur Synchronisierung des Überlagerungsoszillators 38 dient, wobei der Ausgang des Richtkopplers 39 mit dem Eingang des Überlagerungsoszillators 38 verbunden ist. Der Bezugssignalkanal 13 und der Messkanal 14 der langen Übertragungsleitung 3 und jede Verbindung des Raumwellenfilters 27 mit den synchronen Detektoren 34, 35 sind von einer geerdeten Abschirmung 15 umgeben.

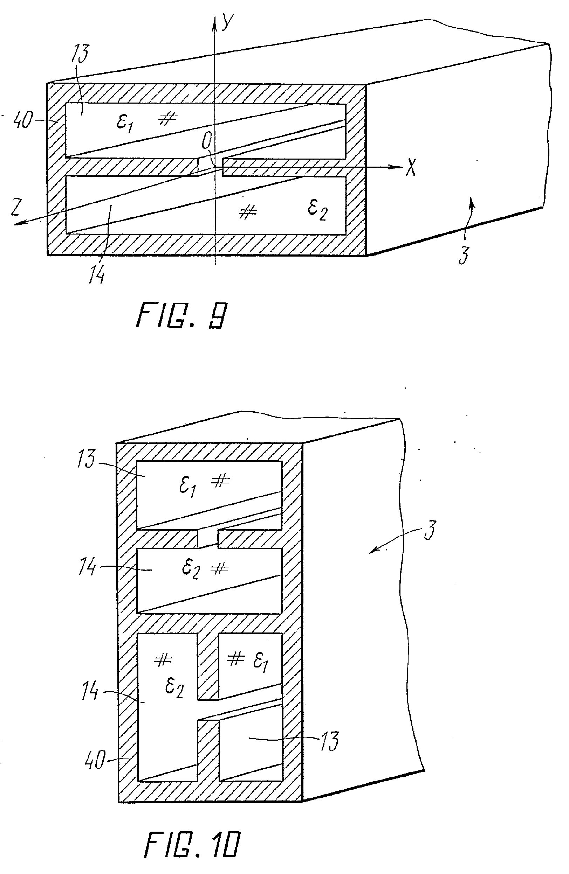

In Fig. 9 ist eine konstruktive Ausführung der Wellenenergie-Übertragungsleitung 3 dargestellt. Der Querschnitt der Wand 40 der langen Wellenenergie-Übertragungsleitung 3 ist dabei rechteckig. In den Schnittpunkt der Querschnittsebene der langen Wellenenergie-Übertragungsleitung 3 und der Längsachse dieser Leitung 3 ist der Ursprung O eines kartesischen X, Y, Z-Koordinatensystems gelegt. Jeder Kanal 13, 14 dieser Leitung 3 ist mit einem Stoff, z.B. einem Dielektrikum mit einer Dielektrizitätskonstante $\varepsilon_1$ bzw. $\varepsilon_2$ gefüllt.

In Fig. 10 ist eine konstruktive Ausführung der langen Wellenenergie-Übertragungsleitung 3 gezeigt, deren Querschnitt eine Kombination von rechteckigen Querschnit-

- 38 -

ten darstellt. Jeder Kanal 13 und 14 der Leitung 3 ist mit einem Stoff, z.B. einem Dielektrikum mit einer Dielektrizitätskonstante $\varepsilon_1$ bzw. $\varepsilon_2$ gefüllt.

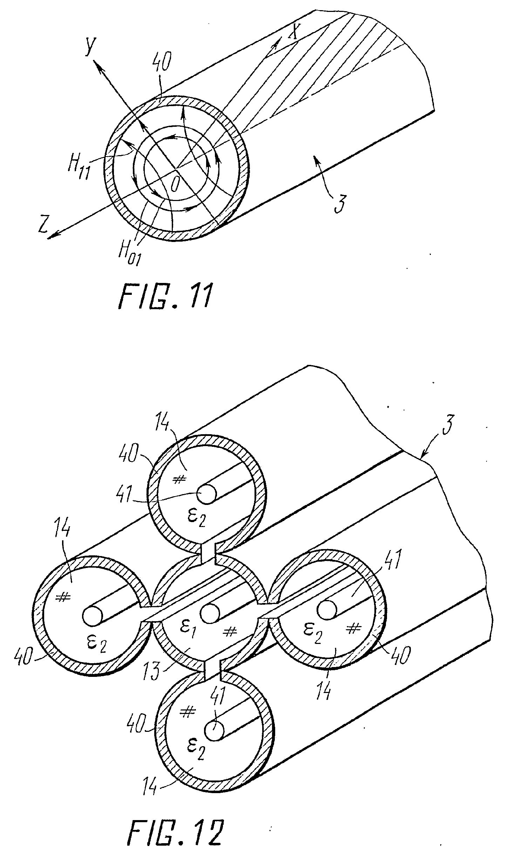

In Fig. 11 ist eine konstuktive Ausführung für die lange Wellenenergie-Übertragungsleitung 3 gezeigt, bei der der Querschnitt der Wand 40 eine ringförmige Gestalt hat. In den Schnittpunkt der Ebene dieses Querschnittes und der Längsachse der langen Wellenenergie-Übertragungsleitung ist der Ursprung 0 des kartesischen X,Y,Z-Koordinatensystem gelegt. Im Querschnitt dieser Leitung 3 sind Verteilungen von radial gebogenen elektrischen $H_{11}$ - und ringförmigen elektrischen $H_{01}$ - Feldlinien gezeigt.

In Fig. 12 ist eine weitere konstruktive Ausführung der langen Wellenenergie-Übertragungsleitung 3 gezeigt, deren Querschnitt eine Kombination von ringförmigen Querschnitten darstellt. Jeder Kanal 13, 14 dieser Leitung 3 vom koaxialen Typ enthält eine Wand 40, einen Mittelleiter 41, zwischen denen ein Stoff, z.B. ein Dielektrikum, Platz findet. Der Kanal 13 ist mit einem Dielektrikum mit einer Dielektrizitätzkonstante $\varepsilon_1$, der Kanal 14 aber mit einem Dielektrikum mit einer Dielektrizitätskonstante $\varepsilon_2$ gefüllt.

Beim Betrieb der langen Wellenenergie-Übertragungsleitung 3 im optischen oder im infraroten Bereich enthält der Informationsverarbeitungsblock 22 zusätzlich einen Überlagerungsfrequenzumsetzer 42 zwecks Herabsetzung der Trägerfrequenz der Wellenenergieschwingungen, dessen erster und zweiter Eingang als Eingänge des Informationsverarbeitungsblockes 22 dienen und dessen Ausgänge an die Eingänge des ersten und zweiten synchronen Detektors 34 bzw. 35 angeschlossen sind. Der dritte Eingang des Überlagerungsfrequenzumsetzers 42 ist mit einem zusätzlichen Ausgang des Überlagerungsoszillators 38 verbunden.

Der Überlagerungsfrequenzumsetzer 42 enthält Mischer 43 , 44, deren erste Eingänge an die Ausgänge des Raumwellenfilters 27 geschaltet sind, einen Mischer 45, dessen

Ausgang an die zweiten Eingänge der Mischer 43,44 und dessen erster Eingang an den Ausgang des Überlagerungsoszillators 38 angeschlossen ist, einen Überlagerungsoszillator 46, dessen Ausgang mit dem zweiten Eingang des Mischers 45 und dessen Eingang über den Richtkoppler 39 mit einem der Ausgänge des Raumwellenfilters 27 verbunden ist. Um durch die Frequenzumsetzung bedingte Verluste zu kompensieren, ist der Überlagerungsfrequenzumsetzer 42 mit Niederfrequenzverstärkern 47, 48 versehen, deren Eingänge mit den Ausgängen der Mischer 43, 44 und deren Ausgänge mit den Eingängen der synchronen Detektoren 34, 35 in Verbindung stehen.

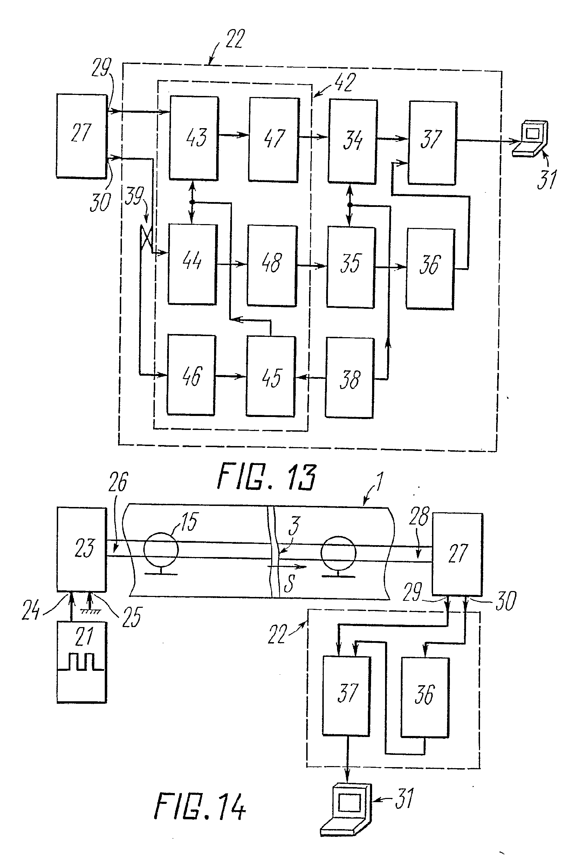

Bei Verwendung von Videosignalen in der langen Wellenenergie-Übertragungsleitung 3 enthält die Einrichtung zur Kontrolle von langgestreckten Objekten 1 (Fig. 14) eine Reihenschaltung aus einer modulierten Wellenenergiequelle 21, die als Videosignalgenerator ausgebildet ist, aus einem Raumwellenfilter 23, einer langen Wellenenergie-Übertragungsleitung 3, die am langgestreckten Objekt 1 befestigt ist, einem Raumwellenfilter 27, einem Informationsverarbeitungsblock 22, der einen Integrator 36 und einen Operationsverstärker 37 aufweist, deren Eingänge an die Ausgänge des Raumwellenfilters 27 angeschlossen sind, wobei der zweite Eingang des Operationsverstärkers 37 mit dem Ausgang des Integrators 36 in Verbindung steht. Der Ausgang des Operationsverstärkers 37 ist an das Videoterminal 31 angeschlossen.

Die Einrichtung zur Kontrolle von langgestreckten Objekten funktioniert wie folgt. Als zu kontrollierender Parameter, der den Zustand des langgestreckten Objektes 1 (Fig. 8) kennzeichnet, ist in der gegebenen Ausführungsform eine vorzeichenvariable Verteilung der Krümmung K des langgestreckten Objektes entlang dessen Längskoordinate S gewählt. Mit dem langgestreckten Objekt 1 ist die Wellenenergie-Übertragungsleitung 3 starr verbunden, in der eine Störung von regulären Wellenvorgängen bei Biegungen des langgestreckten Objektes 1 geschieht.

- 40 -

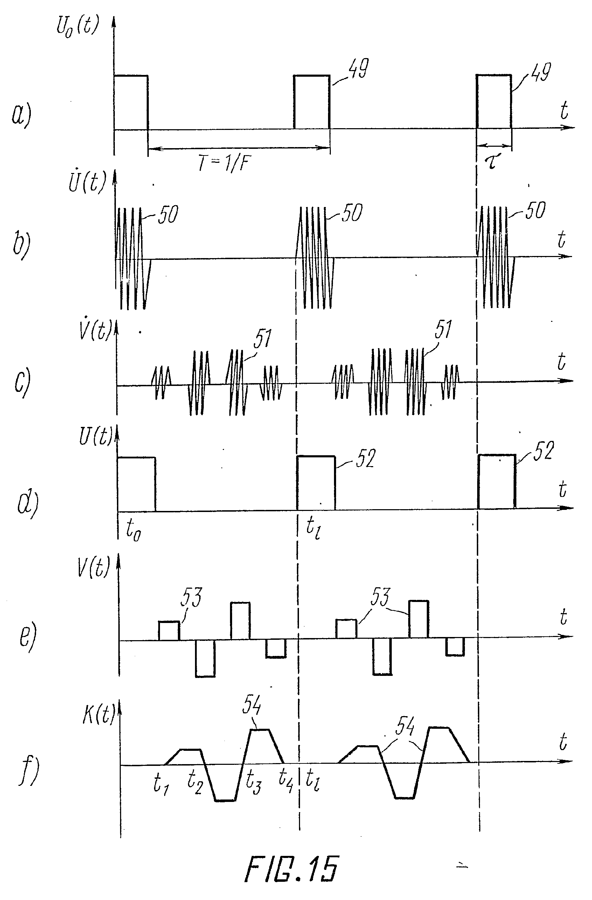

Zu Beginn der Kontrolle liefert der Modulator 33 eine Folge von Impulsen, durch die die Schwingungen des Generators 32 moduliert werden. Die Verläufe der Modulierimpulse sind in Fig. 15 a gezeigt. Die Dauer $\tilde{\mathcal{C}}$ der Modulierimpulse und die Periode T werden durch die geforderten Kontrollparameter- den dynamischen Bereich der Kontrolle und deren Auflösungsvermögen - sowie durch die Parameter der langen Wellenenergie - Übertragungsleitung 3 (Fig. 8) bestimmt. Am Ausgang des Generators 32 wird eine Impulsfolge 50 von kohärenten Schwingungen (Fig. 15 b), z.B. eines elektromagnetischen UHF-Feldes formiert. Diese Folge 50 der kohärenten Schwingungen wird dem Eingang des Raumwellenfilters 23 (Fig. 8) zugeführt. In diesem Filter 23 erfolgt die Umwandlung der räumlichen Struktur des UHF-Feldes in der Weise, dass im Gebiet 26 diese Struktur mit der gewünschten Struktur der Modenfelder des abgesonderten Bezugssignalkanals 13 der langen Leitung 3 übereinstimmt. Somit wird das Bezugssignal geformt und in die Leitung 3 geschickt. Während der Ausbreitung des Bezugssignals über den Bezugssignalkanal 13 erregt dieses Signal an den Biegestellen der langen Wellenenergie-Übertragungsleitung 3 im Messkanal 14 Impulse 51 (Fig. 15c), die ein Messignal bilden, das zum Bezugssignal kohärent ist. Die Impulse pflanzen sich über den Messkanal 14 mit einer Geschwindigkeit fort, die von der Ausbreitungsgeschwindigkeit des Bezugssignals verschieden ist.

Nach dem Passieren des Gebietes 28 (Fig. 8) werden die UHF-Felder der Moden des Bezugssignals und des Messignals mittels des Filters 27 im Raum getrennt und erscheinen an dessen Ausgängen 29, 30 in Form einer Wellenenergie der Felder. Diese Ausgänge 29, 30 sind mit den Eingängen des Imformationsverarbeitungsblockes 22 verbunden. Dadurch werden das Mess- und das Bezugssignal dem Informationsverarbeitungsblock zugeführt. Dann gelangelangt das Messignal zum ersten Eingang des synchronen Detektors 34, das Bezugssignal aber zum Eingang des Richtkopplers 39, mit dessen Hilfe ein geringer Energieteil des Bezugssignals zur Synchronisierung des Über-

- 41 -

lagerungsoszillators 38 abgezweigt wird. Der übrige Teil der Energie wird zum ersten Eingang des synchronen Detektors 35 übertragen. Gleichzeitig damit wird den zweiten Eingängen der synchronen Detektoren 34 und 35 ein Signal des Überlagerungsoszillators 38 zugeleitet, das zum Bezugssignal des UHF-Feldes kohärent ist. Dadurch ergibt sich eine synchrone Demodulation der UHF-Felder (unter Beibehaltung des Vorzeichens der Umhüllenden des UHF-Impulse des Messignals). An den Ausgängen der synchronen Detektoren 34 und 35 erscheinen also elektrische Signale 52 (Fig. 15 d) und 53 (Fig. 15 e). Das Signal 52 ist proportional der Umhüllenden des Bezugssignals. Das Signal 53 ist proportional der Unhüllenden des Messignals unter Berücksichtigung deren Vorzeichens, das seinerseits eine Abbildung der Verteilung von Krümmungszuwächsen entlang des langgestreckten Objektes (Fig. 8) darstellt.

Die elektrischen Impulse 52 (Fig. 15d) des Bezugssignals von dem Ausgang des synchronen Detektors 35 (Fig. 8) werden dem Eingang des Integrators 36 zugeführt, an dessen Ausgang ein elektrisches Signal gebildet wird, das der Amplitude des Impulssignals 52 (Fig. 15 d) entspricht. Das Signal der Integralamplitude wird vom Integrator 36 (Fig. 8) auf den ersten Eingang des Operationsverstärkers 37 gegeben. Dem zweiten Eingang des Operationsverstärkers 37 wird das Signal 53 (Fig. 15 e) von dem Ausgang des synchronen Detektors 34 (Fig. 8) zugeleitet. Vom Ausgang des Operationsverstärkers 37 wird ein elektrisches Signal 54 (Fig. 15 f) abgegriffen, dessen Wert nur durch den Wert des Integrals der Zuwächse der Krümmung K längs des langgestreckten Objektes 1 (Fig. 8) bestimmt wird und nicht von dem Wert des Bezugssignals sowohl am Eingang des Raumwellenfilters 23 als auch am Ausgang 30 des Raumwellenfilters 27 abhängt. Das elektrische Signal 54 (Fig. 15 f) von dem Ausgang des Operationsverstärkers 37 (Fig. 8) trifft am Eingang des Videoterminals 31 ein, in dem dieses Signal entweder selbst auf einem Bildschirmsichtgerät mit Marken, die dem Realmasstab des zu kontrollierenden Parameters entsprechen, oder eine funktionelle Abhängigkeit einer anderen zu kontrollierenden Grösse der Geometrie des langgestreckten Objektes 1 (Fig. 8) von diesem Signal sowie die Verteilung statischer und dynamischer Kraftbeanspruchungen dargestellt werden.

Das erfindungsgemässe Verfahren zur Kontrolle des Zustandes von langgestreckten Objekten und die dieses Verfahren realisierende Einrichtung geben somit die Möglichkeit, eine Fernkontrolle von kontinuierlichen physikalisch-mechanischen Charakteristiken eines langgestreckten Objektes im Raum und in der Zeit dadurch vorzunehmen, dass in der langen Wellenenergie-Übertragungsleitung 3 die Vereinigung der Funktionen der Gewinnung, Primärverarbeitung und Übertragung der Messinformation gewährleistet ist, ohne dass längs des langgestreckten Objektes eine grosse Menge von verschiedenartigen Gebern und Schaltkreisen zur Abfrage der letzteren angeordnet sein müsste.

Um einen Betrieb der Einrichtung im optischen oder infraroten Wellenbereich zu sichern, wird der Informationsverarbeitungsblock 22 mit einem Überlagerungsfrequenzumsetzers42 (Fig. 13) zusätzlich versehen. Hierbei funktioniert der Informationsverarbeitungsblock 22 wie folgt. Ein Bezugssignal kohärenter Licht- oder Infrarotwellen von dem Ausgang 30 des Raumwellenfilters 27 wird über den Richtkoppler 39 dem ersten Eingang des Mischers 44 zugeführt. Das Messignal trifft am ersten Eingang des Mischers 43 ein. Ein durch den Richtkoppler 39 abgezweigter geringer Energieteil wird dem Eingang des Überlagerungsoszillators 46 zugeleitet und synchronisiert dessen Schwingungen relativ zum Bezugssignal. Diese Schwingungen werden vom Ausgang des Überlagerungsoszillators 46 auf den ersten Eingang des Mischers 45 gegeben. An den zweiten Eingang des Mischers 45 wird ein Rundfunkband-Zwischenfrequenzsignal vom Ausgang des Überlagerungsoszillators 38 angelegt. Aus den im Mischer 45 entstehenden Kombinationsfrequenzen des Bezugssignals und des Signals des Überlagerungs-

- 43 -

oszillators 38 wird am Ausgang des Mischers 45 eine z.B. Differenzkomponente von Schwebungen abgetrennt. Das Signal dieser Komponente wird den zweiten Eingängen der Mischer 43, 44 zugeführt. An den Ausgängen der Mischer 43, 44 werden Differenzkomponenten der Schwingungen gewonnen, deren Frequenz der Zwischenfrequenz (d.h. der Freuenz des Überlagerungsoszillators 38) gleich ist, während die Umhüllende der Schwingungen durch die Umhüllende des am Ausgang des Mischers 43 gebildeten Messignals und des am Ausgang des Mischers 44 gebildeten Bezugssignals bestimmt wird. Diese Signale werden von den Ausgängen der Mischer 43 und 44 auf die Eingänge der Zwischenfrequenzverstärker 47 bzw. 48 gegeben. Die verstärkten Signale von den Ausgängen der Verstärker 47 und 48 gelangen an die ersten Eingänge der synchronen Detektoren 34 und 35, an deren zweite Eingänge vom zweiten Ausgang des Überlagerungsoszillators 38 das Zwischenfrequenzsignal angelegt wird, wodurch die synchrone Demodulation durchgeführt wird. Die weitere Arbeit des Informationsverarbeitungsblockes 22 ist analog der obenbeschriebenen Arbeit des in Fig. 8 gezeigten Informationsverarbeitungsblockes.

Somit ermöglichen das erfindungsgemässe Verfahren und die Einrichtung zu seiner Realisierung es, die Zone, in der der Zustand des langgestreckten Objektes überwacht wird, die Änderungsbereiche der zu kontrollierenden Parameter und die Arten derselben zu erweitern, die Genauigkeit, Schnellwirkung und das Auflösungsvermögen der Kontrolle zu erhöhen, die gerätetechnischen Bestandteile der Einrichtung zu vereinfachen, die Betriebscharakteristiken wesentlich zu verbessern sowie den Energieaufwand herabzusetzen.

Gewerbliche Anwendbarkeit

Die Erfindung kann praktisch auf allen Gebieten und in allen Bereichen der industriellen Produktion benutzt werden, wo die Kontrolle des Zustands von langgestreckten Objekten erforderlich ist. Besonders zweckmässig ist die Anwendung der Erfindung

- im Bauwesen beim Bau und bei der Nutzung von Brücken, Hochhäusern, Funk - und Fernsehtürmen, Hochspannungsmasten, Wasserkraftwerkdämmen, Anlegeplätzen, Seedeichen, Deckenkonstruktionen, unterirdischen Übergängen und Tunneln;

- im Maschinenbau, Kraftfahrzeug-, Schiffs- und Flugzeugbau zur Kontrolle des gespannten und verformten Zustands von Fachwerkkonstruktionen, belasteten Elementen sowie zur Kontrolle von äusseren Belastungen, die auf langgestreckte Objekte einwirken;

- in der Elektroenergetik zur Kontrolle und zum Havarieschutz von Kernkraftwerken, zur Überwachung des Zustands von Energieübertragungsleitungen, von Wärme- und elektrischen Feldern;

- in der Automatik und Kybernetik zur Steuerung von Objekten mit verteilten Parametern bei normaler Betriebsart und bei Störungen;

- in der Erdöl- und Erdgasindustrie zur Kontrolle von Produktionsbohrungen, des gespannten und verformten Zustands von Förderrohrleitungen, der Havariesignalisierung, zur Unterdrückung der Eruption von Bohrlöchern durch Richtbohren;

- im Bergbau zur Kontrolle des Zustands und der Geometrie von Bergwerken und Gruben sowie zur Kontrolle der Transportsysteme und der Havariesignalisierung;

- in der Eisenhütten- und Buntmetallindustrie zur Kontrolle der technologischen Abschnitte zur Aufbereitung und Verhüttung von Metallen, zum Kalt- und Warmwalzen sowie zur Kontrolle des gespannten und verformten Zustands von Walzgut bei Herstellung und Gütebescheinigung von Fertigerzeugnissen;

- in der chemischen und Nahrungsmittelindustrie zur Kontrolle von Fertigungszonen und -abschnitten, von Transportsystemen zur Beförderung von Rohstoffen und Erzeugnissen sowie in Systemen zur Warnung und Havariesignalisierung;

- in der Landwirtschaft zur Kontrolle von Bewässerungs- und Meliorationssystemen und Anlagen, von Mechanisierungs- und Automatisierungsmitteln sowie von Getreide-, Obst- und Gemüsespeichern;

- im Verkehrs- und Nachrichtenwesen zur Kontrolle des Zustands von Gleis$^{en}$ und der Beladung von Fahrbetriebsmitteln, zur Verkehrssicherung durch Automatisierung und durch objektive Beurteilung von Situationen auf Verkehrswegen und im Verkehr, zur Kontrolle des Zustands von Verkehrs-Kreuzungsbauwerken, von hydraulischen und pneumatischen Kontainer-Rohrleitungen sowie von Datenübertragungsleitungen;

- in der Medizin zur Kontrolle des Zustands von künstlichen Organen, von elektrischen und Wärmefeldern der Körperoberfläche;

- in der Textil- und Bekleidungsindustrie zur Kontrolle der technologischen Prozesse bei der Herstellung von Stoffen und Fertigerzeugnissen;

- in der Meereskunde und der Meteorologie zur Kontrolle verschiedener Parameter von Wasser- und Gasmediumprofilen, von Seegang und Strömungen sowie von entstehenden Belastungsfeldern;

- in der Geologie zur Bestimmung des Oberflächenreliefs und zur Kontrolle der Ausbreitung seismischer Wellen, zur Gewährleistung des gerichteten Bohrens, zur Kontrolle der Bohrungsgeometrie, des gespannten und verformten Zustands von Schleppseilen und Risern beim Suchen und Erkunden von Seebodenschätzen sowie zur Entwicklung von höchst präzisen Navigationssystemen bei Benutzung von eindimensionalen mechanischen Konstruktionen.

- 46 -

PATENTANSPRÜCHE

1. Verfahren zur Kontrolle des Zustands von langgestreckten Objekten, bei dem ein Sensor gewählt wird, der auf Änderungen des zu kontrollierenden Parameters reagiert, welcher den Zustand des langgestreckten Objekts charakterisiert, und eine lange Leitung zur Wellenenergieübertragung gewählt wird, die zur Übermittlung von Informationen über Änderungen des zu kontrollierenden Parameters bestimmt ist, der den Zustand des langgestreckten Objekts kennzeichnet, wobei man den gewählten Sensor und die lange Wellenenergie-Übertragungsleitung aneinander koppelt und in der Kontrollzone längs der vorgegebenen Koordinate anordnet, längs welcher die Änderung des zu kontrollierenden Parameters erfolgt, welcher den Zustand des langgestreckten Objekts charakterisiert, worauf ein in der Zeit moduliertes Bezugssignal erzeugt und dem Eingang der langen Wellenenergie-Übertragungsleitung zugeführt wird, wobei dieses Signal bei seiner Fortpflanzung in der genannten Leitung entsprechend der Änderung des zu kontrollierenden und den Zustand des langgestreckten Objekts charakterisierenden Parameters umgeformt wird, und nun die Parameter des umgeformten Bezugssignals am Ausgang der langen Wellenenergie-Übertragungsleitung gemessen werden, wobei man nach den gemessenen Parametern des umgeformten Bezugssignals die physikalisch-mechanischen Charakteristiken des Zustands des langgestreckten Objekts längs der vorgegebenen und zur Messung des zu kontrollierenden Parameters benutzten Koordinate bestimmt, dadurch gekennzeichnet, dass eine lange Wellenenergie-Übertragungsleitung (3) gewählt wird, welche die Fortpflanzung von Signalen in der Art von Moden mit bekannter räumlich-zeitlicher Struktur von physikalischen Feldern in dieser Leitung gewährleistet, in dieser langen Wellenenergie-Übertragungsleitung wenigstens ein Bezugssignalkanal (13) und mindestens ein Messkanal (14) mit bekannten Verzögerungszeiten der Modephasengeschwindigkeiten in jedem von diesen Kanälen vorgesehen werden, längs der langen Wellenenergie-Übertragungsleitung die gerichtete Wechselwirkung der Wellenenergie der Modefelder wenigstens
eines Bezugssignalkanals (14) und mindestens eines
Messkanals (14) in Abhängigkeit von der Änderung des
zu kontrollierenden Parameters gewährleistet wird, um
im Messkanal (14) ein Signal zu erhalten, welches sich
bei der Fortpflanzung des Signals im Bezugssignalkanal (13) entsprechend der Änderung des zu kontrollierenden und den Zustand des langgestreckten Objekts (1)
kennzeichnenden Parameters ändert, das in der Zeit modulierte Bezugssignal als zeitlich modulierte Schwingungen physikalischer Felder gebildet wird, und diese
Schwingungen in ein Signal mit vorgegebener räumlicher
Struktur der Modefelder umgeformt werden, die Modefelder an den Ausgängen wenigstens eines Bezugssignals (13)
und mindestens eines Messkanals (14) der langen Wellenenergie-Übertragungsleitung (3) in elektrische, nur
zeitabhängige Signale umgewandelt werden, um die physikalisch-mechanischen Charakteristiken des Zustands des
langgestreckten Objekts (1) längs der vorgegebenen
Koordinate (S) zu bestimmen, längs welcher die Änderung des zu kontrollierenden Parameters erfolgt, und
die Amplitude des elektrischen Signals am Ausgang des
Bezugssignalkanals (13) abgetrennt wird, wobei das elektrische Signal am Ausgang des Messkanals (14) umgekehrt proportional der Amplitudengrösse des elektrischen Signals
am Ausgang des Bezugssignalkanals verstärkt wird, die
lineare Masstabtransformation benutzt wird, welche die
Grösse der Verzögerungszeitdifferenz der Modephasengeschwindigkeiten im Bezugssignalkanal (13) und im Messkanal (14) der langen Wellenenergie-Übertragungsleitung
(3) mit der laufenden Zeit der Kontrolle und mit der
Ablesung des Koordinatenwertes längs der langen Wellenenergie-Übertragungsleitung verknüpft.

2. Verfahren nach Anspruch 1, dadurch g e k e n n -
z e i c h n e t, dass man eine lange Wellenenergie-Übertragungsleitung wählt, in der die Fortpflanzung von
Moden der akustischen oder elektromagnetischen oder optischen Felder in entsprechenden Wellenbereichen gewähr-

- 48 -

leistet wird.

3. Verfahren nach Ansprüchen 1, 2, dadurch gekennzeichnet, dass man zur Erweiterung des dynamischen Änderungsbereiches des zu kontrollierenden Parameters auf das Gebiet seiner Minimalwerte in der langen Wellenenergie-Übertragungsleitung (3) wenigstens einen Bezugssignalkanal (13) und mindestens einen Messkanal (14) mit gleichen Verzögerungszeiten der Modenphasengeschwindigkeiten vorsieht, die lange Wellenenergie-Übertragungsleitung (3) über die Länge in Abschnitte aufteilt, zwischen den Abschnitten eines Kanals eine konstante Signalverzögerungszeit gewährleistet und in den gewählten Abschnitten den Integralwert des zu kontrollierenden Parameters misst.

4. Verfahren nach Ansprüchen 1, 2, dadurch gekennzeichnet, dass man bei der Gewährleistung der längs der langen Wellenenergie-Übertragungsleitung (3) gerichteten Wechselwirkung der Modenfelder wenigstens eines Bezugssignalkanals (13) und mindestens eines Messkanals (14) für die Messung der Verteilung des zu kontrollierenden Parameters wenigstens einen Messkanal mit einer magnetischen Permeabilität, einer dielektrischen Leitfähigkeit, einer akustischen oder optischen Dichte ausführt, die im funktionalen Zusammenhang mit Änderungen der Grösse dieses zu kontrollierenden Parameters stehen.

5. Verfahren nach Ansprüchen 1 bis 4, dadurch gekennzeichnet, dass als zu kontrollierender Parameter Temperatur oder Druck oder Feuchtigkeit oder Dichte oder Salzigkeit sowie deren Kombinationen benutzt werden.

6. Einrichtung zur Kontrolle des Zustandes von langgestreckten Objekten, die eine zur Erzeugung des zeitlich veränderlichen Bezugssignals bestimmte Quelle (21) modulierter Wellenenergie, eine lange Wellenenergie-Übertragungsleitung (3), die in der Zone der Kontrolle des langgestreckten Objekts (1) längs der vorgegebenen Koordinate ( $S$ ) verlegt ist, zur Erfassung und Übertragung von Informationen über Änderungen des zu kontrollierenden Parameters bestimmt ist und mit dem Ausgang der modulierten Wellenenergiequelle (21) in Verbindung steht, sowie einen an die lange Wellenenergie-Übertragungsleitung (3) angeschlossenen Informationsverarbeitungsblock (27),der zur Gewinnung des von der Wellenenergie-Übertragungsleitung (3) umgeformten Bezugssignals aus dieser Leitung und zur Ermittlung der physikalisch-mechanischen Charakteristiken des Zustands des langgestreckten Objekts (1) dient, und auch ein Videoterminal (31) enthält, welches die ermittelten physikalisch-mechanischen Charakteristiken des langgestreckten Objektes wiedergibt und mit seinem Eingang am Ausgang des Informationsverarbeitungsblocks (22) liegt, dadurch gekennzeichnet, dass die lange Wellenenergie-Übertragungsleitung (3) als Multimodewellenleiter mit wenigstens einem Bezugssignalkanal (13) und mindestens einem Messkanal ausgebildet ist, deren Verkopplung von Änderungen des zu kontrollierenden Parameters abhängt, die modulierte Wellenenergiequelle (21) aus einem Modulator (33) und einem mit diesem in Reihe geschalteten Generator (32) zur Erzeugung der Wellenenergie physikalischer Felder ausgeführt ist, und dass die Einrichtung zur Kontrolle des Zustands von langgestreckten Objekten ein erstes Raumwellenfilter (23), das zur Erzeugung des modulierten Signals des Bezugssignalkanals mit vorgegebener räumlich-zeitlicher Struktur der Modenfelder bestimmt ist und zwischen dem Ausgang des Wellenenergiegenerators (32) physikalischer Felder und der langen Wellenenergie-Übertragungsleitung (3) geschaltet ist, sowie ein zweites Raumwellenfilter (27) enthält, welches zur räumlichen Trennung der Modenfelder des durch das Bezugssignal erregten Bezugssignalkanals (13) und der Modenfelder des infolge der Zwischenkanalkopplung erregten Messkanals (14) vorgesehen ist, die von Änderungen des zu kontrollierenden Parameters abhängig ist, und welches zwischen der langen Wellenenergie-Übertragungsleitung (3) und den Eingängen (29, 30) des Informationsverarbeitungsblocks (22) liegt, wobei der Eingang und der Ausgang wenigstens eines

- 50 -

Bezugssignalkanals (13) als erster Eingang (24) bzw. erster Ausgang (29) der Wellenenergiefelder des ersten und zweiten Raumwellenfilters (23 bzw. 27) dienen, und der Eingang sowie der Ausgang wenigstens eines Messkanals (14) den zweiten Eingang (25) bzw. den zweiten Ausgang (30) der Wellenenergiefelder des ersten bzw. zweiten Raumwellenfilters (23 bzw. 27) bilden.

7. Einrichtung nach Anspruch 6, dadurch gekennzeichnet, daß der Informationsverarbeitungsblock (22) synchrone Detektoren (34, 35) zur Umwandlung der Wellenenergie der Felder in elektrische Signale, deren erste Eingänge jeweils mit den Ausgängen der Feldwellenenergie des zweiten Raumwellenfilters (27) verbunden sind, sowie einen Integrator (36), einen Operationsverstärker (37), dessen erster Eingang an den Ausgang des Integrators (36) angeschlossen ist, bei dem der Eingang an den Ausgang des synchronen Detektors (35) geschaltet ist, der Ausgang des Operationsverstärkers (37) den Ausgang des Informationsverarbeitungsblocks (22) bildet und der zweite Eingang des Operationsverstärkers mit dem Ausgang des synchronen Detektors (34) verbunden ist, und einen Überlagerungsoszillator (38) enthält, dessen Ausgang mit den zweiten Eingängen des ersten und zweiten Synchrondetektors (34 bzw. 35) verbunden ist.

8. Einrichtung nach Anspruch 7, dadurch gekennzeichnet, dass zur Gewährleistung des Betriebs im optischen oder Infrarot-Wellenbereich der Informationsverarbeitungsblock (22) einen Überlagerungsfrequenzumsetzer (12) zur Erniedrigung der Trägerschwingungsfrequenz der Wellenenergie enthält, dessen erster Eingang und zweiter Eingang die Eingänge des Informationsverarbeitungsblocks (27) bilden und dessen Ausgänge an die Eingänge der synchronen Detektoren (34, 31) angeschlossen sind, wobei der dritte Eingang des Frequenzumsetzers (12) mit einem zusätzlichen Ausgang des Überlagerungsoszillators (38) verbunden ist.

FIG. 1

FIG. 2

FIG. 3

FIG. 4

FIG. 5

FIG. 6

0314813

**FIG. 7**

**FIG. B**

FIG. 9

FIG. 10

FIG. 11

FIG.12

FIG. 13

FIG.14

FIG.15

# INTERNATIONAL SEARCH REPORT

International Application No PCT/SU 88/00082

## I. CLASSIFICATION OF SUBJECT MATTER (if several classification symbols apply, indicate all)

According to International Patent Classification (IPC) or to both National Classification and IPC

IPC⁴  G 01 B 15/00, 11/26

## II. FIELDS SEARCHED

### Minimum Documentation Searched 7

| Classification System | Classification Symbols |
|---|---|
| IPC⁴ | G 01 B 11/06, 11/26, 15/00 |

### Documentation Searched other than Minimum Documentation to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | US, A, 4459022 (United Technologies Corporation), 10 July 1984 (10.07.84), see column 1, lines 56-62 | 1-8 |
| A | DE, A1, 2543377 (Siemens AG) 7 April 1977, (07.04.77), see page 4, lines 3-15; figure 1 | 1-8 |
| A | CH, A5, 608098, (VEB Carl Zeiss Jena), 15 December 1978 (15.12.78), see column 1 lines 59-65 | 1-8 |
| A | FR, A2, 2507768, (Facom), 17 December 1982 (17.12.82), see column 4 | 1-6 |
| A | DE, C3, 2134657 (Dnepropetrowskij ordena Trudowowo Krasnowo Snameni Gosudarstwenny uniwersitet imeni 300-letija Wossoedinenija Ukrainy s Rossiej), see column 4, lines 5-65, figure 1 | 1-5 |
| A | GB, A, 1293348, (SIRA INSTITUTE), 18 October | 6-8 |

./.

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 30 June 1988 (30.06.88) | 8 August 1988 (08.08.88) |

| International Searching Authority | Signature of Authorized Officer |
|---|---|
| ISA/SU | |

Form PCT/ISA/210 (second sheet) (January 1985)

| FURTHER INFORMATION CONTINUED FROM THE SECOND SHEET | | |
|---|---|---|
| | 1972 (18.10.72), see page 2, lines 110-115 figure 1 -- | |
| A | SU, A1, 1232943, (Ordena Lenina institut problem upravlenia), 23 May 1986 (23.05.86), see column 1, lines 17-28, figures --------- | 6-8 |

**V.☐ OBSERVATIONS WHERE CERTAIN CLAIMS WERE FOUND UNSEARCHABLE [1]**

This international search report has not been established in respect of certain claims under Article 17(2) (a) for the following reasons:

1.☐ Claim numbers............ because they relate to subject matter not required to be searched by this Authority, namely:

2.☐ Claim numbers............ because they relate to parts of the international application that do not comply with the prescribed requirements to such an extent that no meaningful international search can be carried out, specifically:

3.☐ Claim numbers............, because they are dependent claims and are not drafted in accordance with the second and third sentences of PCT Rule 6.4(a).

**VI.☐ OBSERVATIONS WHERE UNITY OF INVENTION IS LACKING [2]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.
☐ No protest accompanied the payment of additional search fees.